(19) Europäisches Patentamt
European Patent Office
Office européen des brevets

(11) **EP 2 787 437 A1**

(12) **EUROPÄISCHE PATENTANMELDUNG**

(43) Veröffentlichungstag:
08.10.2014 Patentblatt 2014/41

(51) Int Cl.:
***G06F 9/45*** *(2006.01)*

(21) Anmeldenummer: 13162073.4

(22) Anmeldetag: 03.04.2013

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Realtime Technology AG**
**81671 München (DE)**

(72) Erfinder: **Trojahner, Kai**
**81671 München (DE)**

(74) Vertreter: **Manitz, Finsterwald & Partner GbR**
**Martin-Greif-Strasse 1**
**80336 München (DE)**

(54) **Verfahren zur Überprüfung und/oder Transformation eines Computerprogramms mit statischen Funktionen erster Klasse**

(57) Die Erfindung betrifft ein Verfahren zur Überprüfung und/oder Transformation eines Computerprogramms, das in einer Programmiersprache vorliegt, welche Funktionen erster Klasse unterstützt, bei dem eine Typüberprüfung des Programms oder zumindest eines Teils des Programms durchgeführt wird, um jedem Ausdruck des Programms oder Teils des Programms einen Typen zuzuordnen, der aus einem Grundtypen und einer Bindungszeit besteht, wobei die Menge der Grundtypen mindestens Basistypen zur Beschreibung einfacher Werte und einen Funktionstypen zur Beschreibung von Funktionen umfasst und die Menge der Bindungszeiten mindestens eine statische Bindungszeit und eine dynamische Bindungszeit umfasst und wobei bei der Typüberprüfung ein Funktionstyp nur gemeinsam mit der statischen Bindungszeit akzeptiert wird.

Fig. 1

**Beschreibung**

Die Erfindung betrifft ein Verfahren zur Überprüfung und/oder Transformation eines Computerprogramms, das in einer Programmiersprache vorliegt, welche Funktionen erster Klasse unterstützt.

Computerprogramme dienen der Ansteuerung der Hardware in Computeroder Rechnersystemen und zur Lösung von Problemen mit den Computersystemen. Computerprogramme werden von einem Programmierer typischerweise auf einer höheren Ebene, z.B. in einer höheren Programmiersprache, entworfen und anschließend in einen Maschinencode übersetzt, welcher durch die Hardware direkt interpretierbar oder ausführbar ist.

Ein wichtiges Anwendungsgebiet von Computersystemen ist das Gebiet der Computergrafik, d.h. des Erzeugens bzw. "Renderns" von Daten zur Darstellung insbesondere dreidimensionaler Grafiken unter Verwendung von Computersystemen bzw. von speziell für diese Anwendungen angepassten Grafikprozessoren.

Bei dem Entwurf von Programmen für diese Anwendungen muss stets ein Kompromiss zwischen der Bildqualität der Grafiken und der Rendergeschwindigkeit eingegangen werden, wobei die entsprechenden Prioritäten stark mit dem jeweiligen Anwendungsbereich variieren. Während z.B. bei der Erzeugung von Offline-Inhalten Renderzeiten von mehreren Stunden zur Erzeugung einer größtmöglichen Realitätsnähe der Grafiken akzeptabel sind, erfordert eine Echtzeit-Visualisierung, dass mehrere Bilder pro Sekunde mit der besten in dem verfügbaren Zeitrahmen erreichbaren Qualität erzeugt werden. Diese konkurrierenden Zielsetzungen haben zu der Entwicklung einer Vielzahl von verschiedenen Renderalgorithmen geführt, die alle einen individuellen Kompromiss zwischen der Visualisierungsqualität und der Rendergeschwindigkeit realisieren. Zudem haben die vorstehenden Zielsetzungen zu der Entwicklung einer Vielzahl von parallelen Hardware-Modellen und Programmiermodellen geführt, die auf schnelles 3D-Rendern ausgerichtet sind.

Eine besondere Bedeutung für die realitätsnahe Visualisierung bei Computergrafiksoftware kommt Shader-Programmen zu, welche für die Darstellung von Schattierungen auf den Oberflächen darzustellender, insbesondere dreidimensionaler geometrischer Objekte zuständig sind, wobei die Darstellung von einem jeweils angenommenen Lichteinfall und Oberflächenmaterial abhängt. Diese Shaderprogramme können eine hohe Komplexität aufweisen und werden im Rahmen eines Rendervorgangs viele Male ausgeführt und sind somit für die erreichbaren Renderzeiten der Grafiksoftware typischerweise ausschlaggebend. Die Entwicklung neuer Shaderprogramme bzw. "Shader" von Grund auf für jede mögliche Kombination und Ausgestaltung von Renderprozeduren und Hardwareplattformen ist mit einem hohen wirtschaftlichen Aufwand verbunden. Deshalb ist es wünschenswert, Shaderprogramme in einer Shaderprogrammiersprache zu entwerfen, die im Gegensatz zu hardwareplattformspezifischen Programmiersprachen nicht an eine ganz bestimmte Hardware gebunden ist. Durch Modularisieren der Shaderprogramme in Codefragmente, die für eine bestimmte Hardwareplattform oder eine bestimmte Renderprozedur spezifisch sind, einerseits und Codefragmente, die davon unabhängig sind, andererseits könnten große Mengen von Computerprogrammcode für verschiedene Renderer-Implementierungen wiederverwendet werden, wodurch der Aufwand für die Entwicklung von Shader- bzw. Renderprogrammen reduziert und die Produktivität der Softwareentwicklung gesteigert würde.

Ein besonders effektiver und gleichzeitig einfacher Mechanismus zur Modularisierung von Programmen sind Funktionen höherer Ordnung. Eine Funktion wird Funktion höherer Ordnung oder "Funktional" genannt, wenn sie eine oder mehrere Funktionen als Argument annimmt oder eine oder mehrere Funktionen als Rückgabewert liefert. Andere Funktionen werden Funktionen erster Ordnung genannt. Eine Programmiersprache, die Funktionen höherer Ordnung unterstützt, muss so genannte Funktionen erster Klasse unterstützen, d.h. dass die Sprache Funktionen ebenso behandelt wie andere Werte. Eine Funktion erster Klasse, welche auch als first-class Funktion bezeichnet wird, kann z.B. einer Funktion höherer Ordnung als Argument übergeben werden, von einer Funktion höherer Ordnung als Rückgabewert geliefert werden, einer Variablen als Wert zugeordnet werden oder als Element in einer Datenstruktur verwendet werden.

Trotz des Potentials von Funktionen erster Klasse zur Vereinfachung des Programmentwurfs unterstützen bisherige Shadersprachen Funktionen erster Klasse nicht, weil deren Implementierung im Allgemeinen die Unterstützung von Funktionszeigern und ein dynamisches Speichermanagement erfordert, um die Umgebung bzw. "Closure" einer Funktion mit den von der Funktion referenzierten nicht-lokalen Werten allozieren zu können. Diese Implementierungstechniken führen zu zusätzlichen Instruktionen und folglich zu einer Verlängerung der Laufzeit, die die erreichbare Renderleistung erheblich beeinträchtigen kann, da Shaderprogramme typischerweise Millionen Male pro Sekunde ausgeführt werden. Der größte Teil der Laufzeitverlängerung ist durch das dynamische Speichermanagement bedingt, aber auch die Dereferenzierung von Funktionszeigern kann zu einem vergeblichen Zugriff auf den Befehlspufferspeicher ("cache miss") und somit zu einem spürbaren Zeitverlust führen. Ferner unterstützen viele Renderplattformen wie z.B. CUDA 1.x, OpenCL oder GLSL weder Funktionszeiger noch dynamisches Speichermanagement.

Aufgabe der Erfindung ist es, ein Verfahren anzugeben, das es ermöglicht, Computerprogramme mit Funktionen erster Klasse daraufhin zu überprüfen, ob sich das jeweilige Programm in ein in Bezug auf seine Funktionalität identisches, äquivalentes Programm transformieren lässt, das keine Funktionen höherer Ordnung bzw. erster Klasse aufweist und somit mit einer hohen Renderleistung insbesondere auch auf einer Hardware ausgeführt werden kann, welche keine Unterstützung für Funktionszeiger und/oder dynamische Speicherverwaltung bietet. Die Überprüfung soll mit geringem Zeitaufwand durchführbar sein und ggf. eine genaue Angabe des Programmbestandteils ermöglichen, aufgrund dessen das Programm nicht transformierbar ist. Ein transformierbares Programm soll entsprechend transformiert werden und dann, ggf. nach Übersetzung in einen entsprechenden Maschinencode, auf der jeweiligen Hardware ausgeführt werden.

Die Aufgabe wird durch ein Verfahren mit den Merkmalen des Anspruchs 1 gelöst.

Anspruch 1 beschreibt ein Verfahren zur Überprüfung und/oder Transformation eines Computerprogramms, das in einer Programmiersprache vorliegt, welche Funktionen erster Klasse unterstützt. Es wird eine Typüberprüfung des Programms oder zumindest eines Teils des Programms durchgeführt, um jedem Ausdruck des Programms oder Teils des Programms einen Typen zuzuordnen, der aus einem Grundtypen und einer Bindungszeit besteht, wobei die Menge der Grundtypen mindestens Basistypen zur Beschreibung einfacher Werte und einen Funktionstypen zur Beschreibung von Funktionen umfasst und die Menge der Bindungszeiten mindestens eine statische und eine dynamische Bindungszeit umfasst. Erfindungsgemäß wird bei der Typüberprüfung ein Funktionstyp nur gemeinsam mit der statischen Bindungszeit akzeptiert.

Im Rahmen der Erfindung wurde erkannt, dass ein Computerprogramm, das in einer Programmiersprache vorliegt, die Funktionen erster Klasse unterstützt, durch partielle Auswertung in ein Programm ohne Funktionen erster Klasse transformiert werden kann, wenn alle Ausdrücke, denen ein Funktionstyp zugeordnet wird, eine statische Bindungszeit aufweisen, d.h. dass der jeweilige Ausdruck bereits vor der Ausführung des Programms, z.B. zum Zeitpunkt des Kompilierens, auswertbar ist. Andererseits kann ein Ausdruck, der eine dynamische Bindungszeit aufweist, nicht als statisch bekannt angenommen werden, sondern ist erst zur Laufzeit des Programms auswertbar und kann somit nicht vor der Ausführung durch partielle Auswertung eliminiert werden. Dies ist nachfolgend anhand zweier unterschiedlicher beispielhafter Programmcodes erläutert, die in einem hypothetischen Dialekt der Programmiersprache C notiert sind.

Programmcode 1:

```
int apply( ((int, int) => int) f, int a, int b) {
return f(a,b);
}
int add( int a, int b) { return a + b; }
int sub( int a, int b) { return a - b; }
int foo( bool p, int a, int b) {
int r;
if (p) {
r = apply( add, a, b);
} else {
r = apply( sub, a, b);
}
return r;
}
```

In Programmcode 1 ist die Funktion apply eine Funktion höherer Ordnung. Die Funktion apply nimmt eine Funktion f als Argument entgegen, die zwei Integerwerte auf einen weiteren Integer abbildet, wie in dem Programmcode durch den annotierten Funktionstypen "(int, int) →int" angegeben ist. Die Funktion apply wendet f auf die zwei weiteren Integer-Argumente a, b an und gibt das Ergebnis zurück. Die Funktion foo verwendet die Funktion apply, um zwei Integerwerte abhängig von dem Wert des Bool'schen Arguments p entweder zu addieren oder zu subtrahieren.

Das Programm höherer Ordnung gemäß Programmcode 1 kann durch partielle Auswertung zur Kompilierzeit in ein äquivalentes Programm erster Ordnung, d.h. ohne Funktionen erster Klasse, transformiert werden. Ein solches transformiertes Programm ist nachfolgend als Programmcode 2 angegeben. In dem Programmcode 2 sind die Aufrufe der Funktion apply jeweils durch den Rumpf der Funktion apply ersetzt, so dass die Funktionen add und sub, die erster Ordnung sind, direkt aufgerufen werden. Das Ersetzen der Funktionsaufrufe wird auch als Inlining bzw. Expandieren bezeichnet.

Programmcode 2:

```
int and( int a, int b) { return a + b; }
int sub( int a, int b) { return a - b ; }
int foo( bool p, int a, int b) {
int r;
if (p) {
r = add( a, b); // apply( add, a, b)
} eise {
r = sub( a b); // apply( sub, a, b)
}
return r;
}
```

Prinzipiell lassen sich aber nicht alle Computerprogramme mit Funktionen erster Klasse durch eine wie vorstehend beschriebene Expansion in ein äquivalentes Programm erster Ordnung transformieren, wie durch den nachfolgenden Programmcode 3 gezeigt ist, welcher eine alternative Definition der Funktion foo darstellt:

Programmcode 3:

```
int foo( bool p, int a, int b) {
((int,int) => int) f;
if (p) {
f = add;
} else {
f = sub;
}
return apply (f,a,b);
}
```

Der Programmcode 3 deklariert einen Bezeichner bzw. eine Variable f, welche eine Funktion repräsentiert, und zwar entweder die Funktion add oder die Funktion sub, abhängig von dem Wert des Bool'schen Arguments p der Funktion foo. Zwar kann die Definition der Funktion apply von dem Compiler formal durch Inlining eingesetzt werden, so dass der Aufruf der Funktion apply in dem Programmcode 3 die Form f(a, b) annimmt. Da der Wert von f aber von dem Wert der Variablen p abhängt, kann weder add noch sub direkt angewendet werden, wenn der Wert von p nicht statisch bekannt ist, was zum Beispiel dann der Fall ist, wenn es sich bei der Funktion foo um eine so genannte Einstiegsfunktion eines Programms handelt, bei der die Programmausführung beginnt.

Die vorstehenden Programmcodes 1 bis 3 veranschaulichen, dass sich bestimmte Programme mit Funktionen erster Klasse durch partielle Auswertung in äquivalente Programme erster Ordnung, d.h. Programme ohne Funktionen erster Klasse, transformieren lassen und andere Programme nicht. Nur wenn Funktionen in dem Programm statisch bekannt sind, kann das Programm durch partielle Auswertung in ein Programm erster Ordnung transformiert werden. Indem das Verfahren gemäß der vorliegenden Erfindung eine Typüberprüfung durchführt, die den Ausdrücken des Programms sowohl einen Grundtypen als auch eine Bindungszeit zuordnet, und bei der Typüberprüfung ein Funktionstyp nur gemeinsam mit der statischen Bindungszeit akzeptiert wird, stellt das Verfahren folglich fest, ob sich das Programm durch partielle Auswertung in ein Programm erster Ordnung, d.h. ohne Funktionen erster Klasse, transformieren lässt. Für den Programmcode 1 ist dies konkret in dem "Beispiel 1" veranschaulicht, welches auf die nachstehende allgemeine Beschreibung folgt und welches ein an diesem konkreten Programm durchgeführtes Überprüfungsverfahren im Detail beschreibt.

Da die erfindungsgemäße Überprüfung und Klassifizierung auf einer Typüberprüfung beruht, kann diese ohne Auswertung des Programms erfolgen. Typüberprüfungen sind an und für sich bekannt und beruhen auf einem für die jeweilige Sprache spezifischen Satz von Typisierungsregeln, welche zusammen ein Typsystem definieren und welche die Ausdrücke eines Programms nach der Art der Werte klassifizieren, die sie berechnen. Die Typisierbarkeit aller Ausdrücke eines Programms oder Programmteils durch erfolgreiche Anwendung der Typisierungsregeln bestimmt, ob das Programm bzw. der Programmteil zulässig ist oder nicht.

Die Erfindung erweitert die bekannte Typüberprüfung dahingehend, dass jedem Ausdruck sowohl ein Grundtyp, der den Wert des Ausdrucks beschreibt, als auch eine Bindungszeit, die den Zeitpunkt der Auswertung des Ausdrucks beschreibt, zugeordnet werden. Das Typsystem ist speziell für eine zweistufige Auswertung des Programms ausgelegt, welche eine statische, d.h. zur Übersetzungszeit erfolgende, partielle Auswertung des Programms und eine darauf folgende dynamische, d.h. zur Laufzeit erfolgende, restliche Auswertung des Programms umfasst. Das Typsystem differenziert dabei nach Ausdrücken mit statischer Bindungszeit, d.h. Ausdrücken, die zur Übersetzungszeit partiell ausgewertet werden können, einerseits und Ausdrücken mit dynamischer Bindungszeit, d.h. Ausdrücken, die nur zur Laufzeit ausgewertet werden können, andererseits und erlaubt dabei selektiv die Formulierung von Programmen, die durch die statische partielle Auswertung in Programme ohne Funktionen erster Klasse umgewandelt werden können.

Durch die kombinierte Typisierung nach Grundtypen und Bindungszeiten ist in besonders einfacher Weise und ohne vorherige Auswertung des gesamten Computerprogramms feststellbar, ob das Programm in ein äquivalentes Programm erster Ordnung transformierbar ist oder nicht. Es kann dabei mit geringem Aufwand sichergestellt werden, dass zumindest alle diejenigen Programme zurückgewiesen werden, die Funktionen erster Klasse enthalten und bei denen die beschriebene Transformation nicht möglich ist.

Bei der Typüberprüfung wird jeder Ausdruck für sich anhand der Typisierungsregeln überprüft, so dass bei dem Auftreten eines Typfehlers in dem Programm feststellbar ist, an welcher Stelle des Programms der Fehler aufgetreten ist. Somit ist eine genaue Angabe des "fehlerhaften" bzw. unzulässigen Programmbestandteils und eine entsprechende Fehlermeldung an den Benutzer möglich, wodurch die Fehlerbehebung für den Programmierer erheblich erleichtert wird.

Durch das Verfahren wird es einem Programmierer ermöglicht, in einfacher Weise ein Programm wie beispielsweise ein Shaderprogramm unter Verwendung von Funktionen erster Klasse zu programmieren, welches in ein äquivalentes Programm erster Ordnung transformiert werden kann. Um die Transformierbarkeit zu gewährleisten, werden dabei statische Funktionen erster Klasse, welche auch als static first class functions bezeichnet werden, zugelassen und dynamische Funktionen erster Klasse nicht akzeptiert. Durch das gezielte und spezifische Zulassen von static first class functions wird die modulare Entwicklung von Programmen ermöglicht, die alle in Programme erster Ordnung transformiert werden können, welche unabhängig von der die Software ausführenden Hardwareplattform in geringerer Laufzeit ausgeführt werden können. Somit wird eine höhere Nutzleistung des Computers, beispielsweise beim Rendern von 3D-Visualisierungen, gewährleistet.

Vorteilhafte Ausführungsformen der Erfindung sind in den Unteransprüchen, der Beschreibung und den Figuren beschrieben.

Wenn in der vorliegenden Beschreibung auf ein Programm Bezug genommen wird, kann sich die entsprechende Beschreibung, sofern nicht anders angegeben, auch auf einen Programmteil beziehen.

Die Typüberprüfung dient dazu, unter Anwendung vorgegebener Typisierungsregeln jedem Ausdruck des Programms einen Typen zuzuordnen. Die Typüberprüfung kann das Anwenden mehrerer, ein Typsystem definierender Typisierungsregeln umfassen, wobei unterschiedliche Regeln für unterschiedliche Arten von Ausdrücken vorgesehen sind. Die Typisierungsregeln weisen den Ausdrücken des Programms Typen zu, die zum einen aus dem Grundtypen und zusätzlich der Bindungszeit des jeweiligen Ausdrucks bestehen. Wenn in der vorliegenden Beschreibung allgemein auf einen "Typen" Bezug genommen wird, ist damit dementsprechend der durch den Grundtypen und die Bindungszeit gebildete Typ gemeint. Wenn auf einen Grundtypen, z.B. einen Funktionstypen oder Basistypen, "mit" einer statischen oder dynamischen Bindungszeit bzw. einen "statischen" oder "dynamischen" Grundtypen Bezug genommen wird, ist damit ein Typ gemeint, der den jeweiligen Grundtypen und die jeweilige Bindungszeit aufweist. Ebenso ist, wenn auf einen Typen "mit" einem Grundtypen, z.B. "mit" einem Funktionstypen, Bezug genommen wird, ein aus Bindungszeit und Grundtyp bestehender Typ gemeint, dessen Grundtyp durch den jeweiligen Grundtypen gegeben ist.

Die Typisierungsregeln des Typsystems umfassen vorzugsweise Typzuordnungsregeln, die angeben, unter welchen Voraussetzungen einem Ausdruck einer bestimmten Art ein bestimmter Typ zugeordnet wird. Ferner umfassen die Regeln vorzugsweise Wohlgeformtheitsregeln, die angeben, unter welchen Voraussetzungen ein Typ als wohlgeformt angenommen wird und dementsprechend verwendet werden darf. Zudem können Subtypisierungsregeln vorgesehen sein, die angeben, unter welchen Bedingungen ein bestimmter Typ als Subtyp eines anderen Typen angenommen wird. Derartige Typsysteme sind an sich bekannt und beispielsweise in "Types and Programming Languages" von Benjamin C. Pierce, MIT Press, 2002, beschrieben.

Gemäß einer Ausführungsform wird eine Fehlermeldung ausgegeben, wenn bei der Typüberprüfung festgestellt wird, dass einem Ausdruck kein Typ zugeordnet werden kann. Dies ist insbesondere dann der Fall, wenn eine auf den jeweiligen Ausdruck anzuwendende Typisierungs- oder Typzuordnungsregel nicht erfolgreich angewendet werden kann, weil der Ausdruck die durch die Typisierungsregeln vorgegebenen Voraussetzungen nicht erfüllt. Bevorzugt gibt die Fehlermeldung den Ausdruck bzw. Unterausdruck an, der nicht typisiert werden kann. Auf diese Weise kann einem Programmierer der Fehler und auch die genaue Ursache bzw. Stelle in dem Programmcode, die den Fehler verursacht, mitgeteilt werden, so dass der Fehler leicht durch entsprechende Änderung des Programmcodes behoben werden kann.

Vorzugsweise wird eine Fehlermeldung ausgegeben, wenn ein Ausdruck mit einem Funktionstypen als mögliches Ergebnis einer dynamischen Fallunterscheidung angegeben ist. Eine Fallunterscheidung umfasst eine Bedingung, von der das Ergebnis der Fallunterscheidung abhängt, und besteht z.B. aus einem if-else-Ausdruck. Bei einer dynamischen Fallunterscheidung ist das Ergebnis der Fallunterscheidung nicht statisch bekannt, sondern erst zur Laufzeit, z.B. wenn der die Bedingung repräsentierende Ausdruck eine dynamische Bindungszeit aufweist und es somit nicht statisch bekannt ist, ob die Bedingung erfüllt ist oder nicht bzw. ob der die Bedingung repräsentierende Ausdruck wahr oder falsch ist. Wenn nun als mögliche Ergebnisse einer solchen dynamischen Fallunterscheidung, z.B. in den Zweigen eines if-else-Ausdrucks, jeweils Ausdrücke mit einem Funktionstypen angegeben sind, würde aus der Fallunterscheidung eine Funktion resultieren, welche nicht statisch bekannt ist und somit nicht durch partielle Auswertung des Programms vor der Laufzeit eliminiert werden kann. Dies wird durch die Fehlermeldung angezeigt.

Unter einem Ausdruck mit einem Funktionstypen ist im Rahmen der vorstehend beschriebenen Ausführungsform vorzugsweise auch ein Ausdruck zu verstehen, der einen aus einem oder mehreren Typen zusammengesetzten Grundtypen aufweist, wobei zumindest einer der Typen, aus denen der Grundtyp zusammengesetzt ist, einen Funktionstypen als Grundtypen aufweist. Ein solcher Typ wird hierin auch als ein einen Funktionstyp "enthaltender" Typ bezeichnet. Zusammengesetzte Grundtypen sind nachstehend noch genauer erläutert.

Bevor auf weitere vorteilhafte Ausführungsformen eingegangen wird, ist nachfolgend zum besseren Verständnis die Syntax einer beispielhaften Programmiersprache in erweiterter Backus-Naur-Form (EBNF) angegeben, welche für die vorliegende Beschreibung relevante Ausdrücke der Programmiersprache formalisiert. Die hier verwendete Syntax entspricht einem einfach getypten λ-Kalkül mit zusätzlichen Bindungszeitannotationen. Dieser Sprachkern kann gegebenenfalls um ein oder mehrere weitere Sprachelemente, d.h. Bindungszeiten, Grundtypen und/oder Ausdrücke, erweitert werden.

## Tabelle 1 (formalisierte Syntax):

$$
\begin{array}{lll}
T & ::= \; M\;C & \textit{Typen} \\
M & ::= \; S \mid D & \textit{Bindungszeiten} \\
C & ::= \; B \mid T \to T \mid T \times T & \textit{Grundtypen} \\
B & ::= \; ... & \textit{Basistypen} \\[4pt]
e & ::= \; c \mid x \mid \lambda x{:}T.\,e \mid e\;e & \textit{Ausdrücke} \\
& \quad\; \mid (e,e) \mid \texttt{fst}\;e \mid \texttt{snd}\;e \\
& \quad\; \mid \texttt{if}\;e\;\texttt{then}\;e\;\texttt{else}\;e \\
c & ::= \; ... & \textit{konstante Symbole} \\[4pt]
v & ::= \; c \mid \lambda x{:}T.\,e \mid (v,v) & \textit{Werte} \\[4pt]
\Gamma & ::= \; \cdot \mid \Gamma, x : T & \textit{Kontexte}
\end{array}
$$

Jeder Typ T assoziiert einen Grundtypen C mit einer Bindungszeit M. Die Bindungszeit M ist entweder statisch S oder dynamisch D. Die Menge der Grundtypen C umfasst Basistypen B, welche in der obigen Tabelle nicht angegeben sind. Die Basistypen B beschreiben einfache Werte und können zumindest jeweils einen Basistypen für ganzzahlige Zahlenwerte (Basistyp: "int") und Bool'sche Werte (Basistyp: "bool") umfassen. Die Menge der Grundtypen C umfasst außerdem Funktionstypen $T_1 \to T_2$ und Paartypen $T_1 \times T_2$, wobei ein Funktionstyp $T_1 \to T_2$ eine Funktion beschreibt, die ein Argument vom Typ $T_1$ (auch Definitionstyp genannt) auf einen Wert vom Typ $T_2$ (auch Zieltyp genannt) abbildet und wobei ein Paartyp $T_1 \times T_2$ ein Paar von Werten beschreibt, die jeweils einen Wert vom Typ $T_1$ bzw. $T_2$ aufweisen.

Grundtypen C, die einen oder mehrere Typen $T_1$, $T_2$ angeben, d.h. in Tabelle 1 der Funktionstyp $T_1 \to T_2$ und der Paartyp $T_1 \times T_2$, werden im nachfolgenden auch als zusammengesetzte Grundtypen bezeichnet. Typen mit einem zusammengesetzten Grundtypen als Grundtyp werden dementsprechend als zusammengesetzte Typen bezeichnet.

Die in Tabelle 1 angegebene Syntax der Ausdrücke e umfasst Standardsprachelemente. Dazu gehören konstante Symbole c, die in der in Tabelle 1 angegebenen Syntax nicht näher spezifiziert sind und beispielsweise Operatoren wie Plus (+), Minus (-), logisches Und (and), logisches Oder (or), logisches Nicht (not), Ist-gleich (=), kleiner (<) und größer (>) umfassen können. Ferner umfassen die Ausdrücke e Variablen x und Funktionen bzw. Funktionsdefinitionen, welche durch die Symbolfolge λx:T.e dargestellt werden. λ symbolisiert, dass es sich um eine Funktionsdefinition handelt, welche auch als λ-Abstraktion bezeichnet wird. Die Symbolfolge x:T definiert die Variable x als Variable der Funktion, für die der Typ T z.B. vom Benutzer explizit als Typ annotiert worden ist. Das Symbol e symbolisiert den Rumpf der Funktion. Die Ausdruckssyntax umfasst ferner Anwendungen bzw. Applikationen $e_1\, e_2$, die die Anwendung einer Funktion $e_1$ auf ein Argument $e_2$ darstellen, Paarkonstruktoren $(e_1, e_2)$, die ein Paar definieren, Projektionen fst e, snd e, die das erste bzw. zweite Element des Paares e projizieren, und bedingte Ausdrücke if $e_p$ then e else e' mit der bekannten Bedeutung. Die Menge der Werte v umfasst die konstanten Symbole c, Funktionen bzw. Abstraktionen λx:T.e und Paare von Werten (v, v).

Ein Typüberprüfungskontext Γ, welcher auch einfach als Kontext bezeichnet wird, ist eine Liste von Paaren, die den Variablen x des Programms jeweils einen Typen zuordnen. Die Symbolfolge x:T bedeutet, dass der Variablen x der Typ T zugeordnet worden ist. Ein Punkt · bezeichnet den leeren Kontext. Der Einfachheit halber wird im Folgenden in Zusammenhang mit der konkreten Definition der Typisierungsregeln angenommen, dass alle gebundenen Variablen und die freien Variablen des Programms unterschiedliche Bezeichner bzw. Namen haben. Die jeweilige Beschreibung ist auch auf Programme anwendbar, bei denen dies nicht der Fall ist, da sich die obige Bedingung stets durch Umbezeichnung gleich bezeichneter, aber unterschiedlicher Variablen gewährleisten lässt.

Ein Programm stellt in der verwendeten Programmiersprache, welche insbesondere eine λ-Syntax verwendet oder in dieser darstellbar ist, vorzugsweise genau einen Ausdruck dar. Ein Ausdruck besteht typischerweise aus mehreren Unterausdrücken, die wiederum Ausdrücke enthalten können. Die Anwendung der Typzuordnungsregeln auf einen Ausdruck erfordert, dass zunächst rekursiv die Unterausdrücke getypt werden, bis der gesamte Ausdruck typisiert ist oder die Typüberprüfung einen Typfehler ergibt.

Gemäß einer vorteilhaften Ausführungsform wird eine Fehlermeldung ausgegeben, wenn bei der Typüberprüfung festgestellt wird, dass in dem Programm oder in dem Teil des Programms ein Funktionstyp $T_1 \to T_2$ annotiert ist, der keine statische Bindungszeit S aufweist. Die Typannotation kann z.B. von der Art x:T sein und dient der Festlegung des Typen T einer Funktionsvariablen x in einer Funktionsdefinition λx:T.e. Die Typannotation wird vorzugsweise manuell vom Programmierer bei der Formulierung des Programms vorgenommen. Durch die vorstehende Maßnahme wird sichergestellt, dass in derartigen Typannotationen nur zulässige Funktionstypen, d.h. Funktionstypen mit statischer Bildungszeit, akzeptiert werden.

Eine explizite Typannotation ermöglicht es, einen Ausdruck, der eine Funktion definiert, unabhängig von den übrigen Ausdrücken des Programms und insbesondere unabhängig von einem Operanden, auf den die Funktion ggf. angewendet wird, auf seinen Typen und seine Zulässigkeit hin zu überprüfen. Zu diesem Zweck wird überprüft, ob der annotierte Typ der Funktionsvariablen selbst zulässig ist und ob der Rumpf der Funktion unter Voraussetzung des annotierten Typen für die Funktionsvariable zulässig ist.

Es ist ein grundsätzlicher Vorteil des hierin beschriebenen Verfahrens, dass einzelne Ausdrücke bzw. Programmteile unabhängig von den übrigen Ausdrücken bzw. Programmteilen auf ihren Typen hin überprüft werden können, d.h. ohne dass alle übrigen Programmteile und somit das gesamte Programm gleichzeitig vorliegen müssen. Stattdessen ist es zur Typüberprüfung eines Ausdrucks in jedem Fall ausreichend, wenn zum Zeitpunkt der Überprüfung nur die Typen der übrigen Ausdrücke bzw. Programmteile bekannt sind. Dadurch wird eine modulare Programmierung und Überprüfung ermöglicht, was die Erstellung zulässiger Programme erheblich erleichtert.

Aufgrund der expliziten Typannotation kann jeweils gesondert überprüft und dem Benutzer im Fehlerfall mitgeteilt werden, ob ein unzulässiger Typ annotiert wurde, d.h. die Funktion unter Voraussetzung eines fehlerhaften Typen definiert wurde, ob der Rumpf der Funktion unter Voraussetzung des annotierten (zulässigen) Typen unzulässig ist oder ob trotz zulässiger Funktionsdefinition die Funktion jedoch in dem Programm auf einen Operanden angewendet wird, welcher nicht den erwarteten annotierten Typen aufweist. Diese getrennte Überprüfung ermöglicht eine modulare Überprüfung und eine aussagekräftige Fehlerdiagnose mit geringem Aufwand.

Die vorstehend beschriebene Vorschrift zur Überprüfung von Typannotationen kann im Fall von Funktionsdefinitionen durch eine entsprechende Typzuordnungsregel realisiert sein, welche auf Funktionsdefinitionen anzuwenden ist, ggf. in Kombination mit einer Wohlgeformtheitsregel, die angibt, unter welcher Voraussetzung ein Typ mit einem Funktionstypen als Grundtyp als wohlgeformt angenommen wird. Nachfolgend sind eine entsprechende Typzuordnungsregel T-LAM beispielhaft angegeben, welche die Voraussetzung umfasst, dass bei einem Ausdruck $\lambda x{:}T.e$ der Typ $T$ wohlgeformt ist (ausgedrückt durch $T: *$), sowie eine Wohlgeformtheitsregel WF-FUN, in der die Voraussetzung formuliert ist, dass ein Funktionstyp nur mit statischer Bindungszeit wohlgeformt ist.

$$\frac{T : \star \quad \Gamma, x : T \vdash e : T'}{\Gamma \vdash \lambda x{:}T.\,e : S\ (T \to T')} \ \text{(T-Lam)}$$

$$\frac{M_1\,C_1 : \star \quad M_2\,C_2 : \star}{S\ (M_1\,C_1 \to M_2\,C_2) : \star} \ \text{(WF-Fun)}$$

Prinzipiell sind Regeln gemäß der vorstehenden Schreibweise so zu verstehen, dass die oberhalb des waagrechten Trennstriches formulierten, ein oder mehreren Voraussetzungen bei der Anwendung der jeweiligen Regel geprüft werden und die unterhalb des Trennstriches dargestellten, ein oder mehreren Schlussfolgerungen abgeleitet werden, wenn die Voraussetzungen erfüllt sind. Eine Gesamtübersicht bevorzugter Typisierungsregeln ist in den nachfolgenden, in Zusammenhang mit bevorzugten Ausführungsbeispielen erläuterten Tabellen 3a, 3b, 3c und 3d enthalten.

Wie vorstehend beschrieben, erleichtert die explizite Typannotation bei der Definition von Funktionsvariablen die Typüberprüfung und erlaubt eine modulare Überprüfung und aussagekräftige Fehlerdiagnose. Das Verfahren kann deshalb verlangen, dass in Funktionsdefinitionen eine wie vorstehend beschriebene explizite Annotation des Typen für jede Funktionsvariable vorgesehen ist, wobei andernfalls z.B. eine Fehlermeldung ausgegeben werden kann. Vorzugsweise wird die Annotation eines vollständigen Typen mit sowohl Grundtypen als auch Bindungszeit der jeweiligen Funktionsvariable verlangt. Zur notationellen Vereinfachung kann es auch zugelassen werden, wenn eine Funktionsdefinition eine explizite Typannotation umfasst, die aber nur den Grundtypen und nicht die Bindungszeit des Typen der Variablen angibt und/oder wenn die Annotation einen zusammengesetzten Grundtypen für die Funktionsvariable angibt und dabei jeweils nur den Grundtypen der Typen angibt, aus denen der zusammengesetzte Grundtyp zusammengesetzt ist, d.h. z.B. x: (int→int) anstatt x:S(Dint→Dint). Das Verfahren kann dann die Definition so behandeln, als sei ein zulässiger Standardtyp annotiert worden, welcher den jeweiligen Grundtypen und eine für diesen Grundtypen zulässige Bindungszeit aufweist. Dabei kann z.B. die statische Bindungszeit für Funktionen und/oder - soweit zulässig - die dynamische Bindungszeit für alle anderen Typen angenommen werden. Alternativ kann eine Fehlermeldung ausgegeben werden und/oder eine Aufforderung ausgegeben werden, die Bindungszeit zu annotieren. Gemäß einer Ausführungsform wird zumindest für Funktionstypen eine explizite Annotation der Bindungszeit verlangt.

Gemäß einer Ausführungsform ist auf den Bindungszeiten M eine lineare Ordnung definiert, gemäß der die statische Bindungszeit S kleiner als die dynamische Bindungszeit D ist. Entsprechend der Definition einer solchen Ordnung kann bei der Typüberprüfung zugelassen werden, dass ein Ausdruck mit einer statischen Bindungszeit S auch an einer Stelle in dem Programm verwendet werden kann, an dem ein Ausdruck mit einer dynamischen Bindungszeit D erwartet wird, sofern ein entsprechender wohlgeformter Typ mit einer dynamischen Bindungszeit vorhanden ist. Das bedeutet, dass insbesondere Ausdrücke mit einem statischen Basistypen auch verwendet werden können, wenn ein dynamischer Basistyp erwartet wird, während andererseits Funktionsausdrücke nur mit statischer Bindungszeit verwendet werden können, da kein wohlgeformter Funktionstyp mit dynamischer Bindungszeit existiert.

Eine solche Ordnung bzw. Reihenfolge kann durch eine Regel wie z.B. die folgende Regel B-STATIC formalisiert sein, deren Anwendbarkeit überprüft wird, wenn in einer Typzuordnungsregel eine bestimmte Ordnung der Bindungszeiten von Unterausdrücken eines zu typisierenden Ausdrucks als Voraussetzung spezifiziert ist. Die Ordnung der Bindungszeiten ist bevorzugt reflexiv, wie nachfolgend durch die beispielhafte Regel B-REFL formalisiert ist:

$$S <: D \quad \text{(B-STATIC)}$$

$$M <: M \quad \text{(B-REFL)}$$

Bevorzugt wird bei der Typüberprüfung ein Basistyp B mit jeder Bindungszeit S, D als wohlgeformt angenommen. Es können also in dem Programm Variablen verwendet werden, die dynamische Werte des jeweiligen Basistypen, z.B. ganzzahlige dynamische Zahlenwerte oder dynamische Gleitkommazahlenwerte, repräsentieren, ebenso wie Variablen, die statisch bekannte Werte von dem jeweiligen Basistyp repräsentieren. Die Annahme von Basistypen mit jeder Bindungszeit als wohlgeformt ist vorzugsweise in einer Wohlgeformtheitsregel für Basistypen spezifiziert. Eine entsprechende beispielhafte Regel WF-BASE ist nachfolgend angegeben:

$$M\ B : \star \quad \text{(WF-BASE)}$$

Gemäß einer vorteilhaften Ausführungsform wird bei der Typüberprüfung ein Typ $M(T_1 \rightarrow T_2)$ mit einem Funktionstypen $T_1 \rightarrow T_2$ als Grundtyp nur dann als wohlgeformt angenommen, wenn der Funktionstyp einen wohlgeformten Zieltyp $T_2$ und für die ein oder mehreren Variablen der Funktion jeweils einen wohlgeformten Definitionstyp $T_1$ angibt und wenn der Typ $M(T_1 \rightarrow T_2)$ eine statische Bindungszeit S aufweist. Dadurch wird gewährleistet, dass bei der Typüberprüfung ein Funktionstyp nur gemeinsam mit der statischen Bindungszeit verwendet wird. Die vorstehend beschriebene Bedingung kann durch eine Wohlgeformtheitsregel realisiert werden, die angewendet wird, um festzustellen, ob ein Funktionstyp wohlgeformt ist. Diese Wohlgeformtheitsregel kann insbesondere der vorstehend angegebenen Regel WF-FUN entsprechen.

Die obige Regel WF-FUN ist auf unäre bzw. einstellige Funktionen anwendbar, d.h. Funktionen, deren Definitionsmenge genau eine Variable umfasst. Prinzipiell lässt sich auch für mehrstellige Funktionen, d.h. Funktionen mit mehreren Variablen, eine entsprechende Regel aufstellen, die überprüft, ob jeder Definitionstyp ein wohlgeformter Typ ist und ob der Zieltyp wohlgeformt ist, um einen Funktionstypen als wohlgeformt anzunehmen. Da eine mehrstellige Funktion aber immer auch als Ineinander-Schachtelung einer entsprechenden Anzahl von unären Funktionen darstellbar ist, wird bei den hierin konkret als Beispiel formalisierten Regeln der Einfachheit halber von unären Funktionen ausgegangen.

Die Wohlgeformtheitsregeln werden vorzugsweise immer dann angewendet, wenn in einer Funktionsdefinition ein Typ annotiert ist, dessen Wohlgeformtheit zu überprüfen ist, und vorzugsweise dann, wenn einem Ausdruck im Rahmen einer Subtypisierung ein Supertyp zugeordnet werden soll, damit der Ausdruck die Voraussetzungen einer anzuwendenden Typzuordnungsregel erfüllen kann, wie im Weiteren noch erläutert ist.

Gemäß einer Ausführungsform umfasst die Menge der Grundtypen C eine Menge von zusammengesetzten Grundtypen zur Beschreibung von zusammengesetzten Werten, die zumindest einen Paartypen $T_1 \times T_2$ zur Beschreibung von Paaren von Werten umfasst. Derartige zusammengesetzte Grundtypen zur Beschreibung von zusammengesetzten Werten und insbesondere Paartypen erlauben die Zusammenfassung mehrerer Werte in Paaren, wobei durch Schachtelung mehrerer Paare ineinander die Zusammensetzung einer beliebigen Anzahl von Werten möglich ist, wodurch die Flexibilität der Programmierung erheblich erhöht wird. Ein Grundtyp zur Beschreibung eines zusammengesetzten Werts gibt vorzugsweise jeweils einen Grundtypen für jedes der Elemente bzw. jeden der Werte an, aus denen der zusammengesetzte Wert zusammengesetzt ist.

Bevorzugt wird bei der Typüberprüfung ein Typ $M(M_1 C_1 \times M_2 C_2)$ mit einem Paartypen $M_1 C_1 \times M_2 C_2$ als Grundtyp nur dann als wohlgeformt angenommen, wenn die Typen $M_1 C_1$, $M_2 C_2$, die die Elemente des Paars beschreiben, jeweils wohlgeformt sind und Bindungszeiten $M_1$, $M_2$ aufweisen, die nicht kleiner sind als die Bindungszeit M des Typen

$M(M_1C_1 \times M_2C_2)$.

Die Wohlgeformtheit eines Paartypen gemäß der vorstehenden Beschreibung wird vorzugsweise durch Anwenden einer Wohlgeformtheitsregel für Paare überprüft, welche beispielsweise der nachstehend wiedergegebenen Regel WF-PAIR entsprechen kann:

$$\frac{M_1\, C_1 : \star \quad M_2\, C_2 : \star \quad M <: M_i}{M\,(M_1\, C_1 \times M_2\, C_2) : \star} \ (\text{WF-Pair})$$

Der Zusammenhang M <: Mi mit i=1, 2 bringt dabei zum Ausdruck, dass die Bindungszeiten $M_1$, $M_2$ nicht kleiner sind als die Bindungszeit M des Paartypen.

Gemäß einer weiteren Ausführungsform wird bei der Typüberprüfung einem Ausdruck λx:T.e, der eine Funktion mit zumindest einer Funktionsvariablen x definiert und eine Angabe des Typen T jeder Funktionsvariablen x sowie eine Angabe des Rumpfs e der Funktion umfasst, genau dann, wenn der angegebene Typ T jeder Funktionsvariablen x wohlgeformt ist und dem Rumpf e der Funktion in dem Kontext, der den Kontext Γ des Ausdrucks λx:T.e und die ein oder mehreren Funktionsvariablen x mit dem jeweils angegebenen Typen T jeder Funktionsvariablen x umfasst, ein Typ T' zugeordnet wird, ein Funktionstyp T→T' mit statischer Bindungszeit S zugeordnet, welcher die für die eine oder mehreren Funktionsvariablen x angegebenen Typen T als Definitionstypen der Funktion und den dem Rumpf e zugeordneten Typen T' als Zieltypen der Funktion angibt.

Die Angabe des Typen T jeder Funktionsvariablen x ist dabei vorzugsweise eine wie vorstehend beschriebene z.B. durch den Programmierer vorgenommene explizite Typannotation. Durch die Zuordnung der statischen Bindungszeit zu dem Funktionstypen unter den obigen Voraussetzung werden Funktionsdefinitionen typisiert und somit zunächst zugelassen, so dass die Programmierung statischer Funktionen erster Klasse ermöglicht wird. Im Zusammenwirken mit den übrigen Typisierungsregeln wird sichergestellt, dass Funktionen nur so verwendet werden, dass sie statisch ausgewertet werden können, und andernfalls ein Typisierungsfehler auftritt und eine entsprechende Fehlermeldung ausgegeben werden kann. Beispielsweise wird in Zusammenhang mit der noch zu beschreibenden Typisierungsregel für bedingte Ausdrücke sichergestellt, dass die Verwendung einer Funktionsdefinition als Zweig bzw. Fall in einem bedingten if-else-Ausdruck, welcher eine Bedingung mit einer dynamischen Bindungszeit aufweist, zu einem Typfehler führt. Somit wird erkannt, dass der bedingte Ausdruck in diesem Fall nicht durch partielle Auswertung eliminiert werden könnte und das Programm folglich nicht partiell zu einem Programm erster Ordnung ausgewertet werden könnte.

Vorzugsweise wird die vorstehend beschriebene Vorschrift durch eine Typzuordnungsregel realisiert, die angewendet wird, wenn eine Funktionsdefinition zu typisieren ist. Eine beispielhafte Regel T-LAM für unäre Funktionsdefinitionen ist nachfolgend angegeben.

$$\frac{T : \star \quad \Gamma, x : T \vdash e : T'}{\Gamma \vdash \lambda x{:}T.e : S\,(T \to T')} \ (\text{T-Lam})$$

Die Typrelation F ⊢ e : T bedeutet, dass dem Ausdruck e in dem Kontext Γ des Ausdrucks der aus Grundtyp und Bindungszeit bestehende Typ T zugeordnet wird. Der Typisierungskontext Γ eines Ausdrucks e enthält vorzugsweise zumindest diejenigen Variablen mit den jeweils zugeordneten Typen, die in den dem jeweiligen Ausdruck übergeordneten Ausdrücken definiert werden, wobei in den beispielhaft angegebenen Typzuordnungsregeln das Symbol Γ stets den Kontext des jeweiligen mit der Typzuordnungsregel zu typisierenden Ausdrucks bezeichnet. Die vorstehende Regel T-LAM sagt dementsprechend aus, dass dem Ausdruck λx:T.e in dem Kontext Γ des Ausdrucks λx:T.e unter den angegebenen weiteren Voraussetzungen der angegebene Typ zugeordnet wird, wenn dem Ausdruck e in dem Kontext Γ, x:T, d.h. dem Kontext, der den Kontext Γ des Ausdrucks λx:T.e selbst sowie das zusätzliche Typzuordnungspaar x:T mit der Variablen x und dem Typen T enthält, der Typ T' zugeordnet wird.

Wenn in der vorliegenden Beschreibung allgemein darauf Bezug genommen wird, dass einem Ausdruck ein Typ zugeordnet wird bzw. dass überprüft wird, ob einem Ausdruck ein Typ zugeordnet wird, ist darunter, soweit nicht anders angegeben, vorzugsweise zu verstehen, dass dem Ausdruck in dem Kontext des Ausdrucks der Typ zugeordnet wird.

Gemäß einer weiteren Ausführungsform wird bei der Typüberprüfung einem Ausdruck (e₁, e2), der ein Paar definiert, wobei ein erstes Element des Paares durch einen ersten Unterausdruck e₁ und ein zweites Element des Paares durch einen zweiten Unterausdruck e₂ angegeben ist, genau dann, wenn dem ersten Unterausdruck e₁ ein erster Typ $T_1$ und dem zweiten Unterausdruck e₂ ein zweiter Typ $T_2$ zugeordnet wird, ein Paartyp ($T_1 \times T_2$) mit statischer Bindungszeit S zugeordnet, der das erste Element des Paares durch den ersten Typen $T_1$ und das zweite Element des Paares durch

den zweiten Typen $T_2$ beschreibt.

Die vorstehende Vorschrift ist vorzugsweise durch eine Typzuordnungsregel realisiert, welche überprüft wird, wenn ein ein Paar definierender Ausdruck zu typisieren ist. Eine solche Regel T-PAIR ist nachfolgend beispielhaft angegeben:

$$\frac{\Gamma \vdash e_1 : T_1 \quad \Gamma \vdash e_2 : T_2}{\Gamma \vdash (e_1, e_2) : S\ (T_1 \times T_2)}\ \text{(T-Pair)}$$

Bevorzugt ist sowohl auf der Menge der Typen T als auch auf der Menge der Grundtypen C jeweils eine reflexive und transitive Subtypbeziehung definiert. Eine Subtypbeziehung legt fest, unter welchen Voraussetzungen ein Typ ein Subtyp eines anderen Typen ist, wobei der letztgenannte Typ dann auch als Supertyp bezeichnet wird. Ist ein Typ ein Subtyp eines anderen Typen, wird im Rahmen der Typüberprüfung ein Ausdruck, dem der Subtyp zugeordnet wird, vorzugsweise auch überall dort zugelassen, wo ein Ausdruck von dem Supertypen zulässig ist bzw. erwartet wird, sofern beide Typen wohlgeformt sind. Die Definition der Subtypbeziehungen vereinfacht die Typüberprüfung, da verschiedene Typen mit denselben Typisierungsregeln behandelt werden können. Um zu überprüfen, ob ein Typ ein Subtyp eines anderen Typen ist, können ein oder mehrere Subtypenregeln überprüft und angewendet werden, die definieren, wann ein Typ ein Subtyp eines anderen Typen ist.

Bevorzugt wird ein aus Bindungszeit M und Grundtyp C bestehender erster Typ T = M C genau dann als Subtyp eines zweiten Typen T' = M'C' angenommen, wenn die Bindungszeit M des ersten Typen T kleiner oder gleich der Bindungszeit M' des zweiten Typen ist und wenn der Grundtyp C des ersten Typen T ein Subtyp des Grundtypen C' des zweiten Typen T' ist. Aufgrund der linearen Ordnung der Bindungszeiten mit S<: D gemäß der Regel B-STATIC bedeutet dies, dass ein aus einem Grundtyp und einer statischen Bindungszeit bestehender Typ stets ein Subtyp des denselben Grundtypen und eine dynamische Bindungszeit aufweisenden Typen ist. Durch die obige Subtypbeziehung wird erreicht, dass in dem Programm ein statischer Ausdruck auch stets dort eingesetzt werden kann, wo im Rahmen der Typüberprüfung ein Ausdruck mit einem entsprechenden Grundtypen und einer dynamischen Bindungszeit erwartet wird, sofern beide Typen wohlgeformt sind.

Die vorstehende Vorschrift wird vorzugsweise durch eine Subtypenregel realisiert, die angewendet wird, um zu überprüfen, ob ein Typ ein Subtyp eines anderen Typen ist. Eine solche Regel SUB-TYPE ist nachfolgend beispielhaft angegeben:

$$\frac{M <: M' \quad C <: C'}{M\ C <: M'\ C'}\ \text{(Sub-Type)}$$

Die Notation T<: T' bedeutet, dass der Typ T ein Subtyp des Supertypen T' ist. Während die vorstehende Vorschrift Subtypenbeziehungen zwischen aus Bindungszeit und Grundtyp bestehenden Typen definiert, sind nachfolgend Subtypenbeziehungen zwischen Grundtypen erläutert.

Bevorzugt wird ein erster Funktionstyp $T_{11} \rightarrow T_{12}$ genau dann als Subtyp eines zweiten Funktionstypen $T_{21} \rightarrow T_{22}$ angenommen, wenn jeder Definitionstyp $T_{21}$ des zweiten Funktionstypen ein Subtyp des jeweiligen korrespondierenden Definitionstypen $T_{11}$ des ersten Funktionstypen ist und der Zieltyp $T_{12}$ des ersten Funktionstypen ein Subtyp des Zieltypen $T_{22}$ des zweiten Funktionstypen ist. Die Voraussetzung, dass der Definitionstyp $T_{21}$ des zweiten Funktionstypen ein Subtyp des Definitionstypen $T_{11}$ des ersten Funktionstypen ist, bedeutet, dass der erste Funktionstyp eine Funktion beschreiben muss, die zumindest diejenigen Argumente bzw. Operanden akzeptiert und verarbeiten kann, die der zweite Funktionstyp akzeptiert und verarbeitet. Die Voraussetzung, dass der Zieltyp $T_{12}$ des ersten Funktionstypen ein Subtyp des Zieltypen $T_{22}$ des zweiten Funktionstypen ist, bedeutet, dass der erste Funktionstyp eine Funktion beschreiben muss, die einen Ausdruck mit einem Typen $T_{12}$ liefert, der zulässigerweise überall dort verwendet werden darf, wo ein Ausdruck vom Typ $T_{22}$ erwartet wird.

Die vorstehende Vorschrift wird vorzugsweise durch eine Subtypenregel für Funktionstypen realisiert, die angewendet wird, um zu überprüfen, ob ein Funktionstyp ein Subtyp eines anderen Funktionstypen ist. Eine solche Regel SUB-FUN ist nachfolgend beispielhaft angegeben.

$$\frac{T_{21} <: T_{11} \quad T_{12} <: T_{22}}{T_{11} \rightarrow T_{12} <: T_{21} \rightarrow T_{22}}\ \text{(Sub-Fun)}$$

Gemäß einer weiteren Ausführungsform wird ein erster Paartyp $T_{11} \times T_{12}$ genau dann als Subtyp eines zweiten

Paartypen $T_{21} \times T_{22}$ angenommen, wenn der Typ $T_{11}$ des ersten Elements des ersten Paartypen ein Subtyp des Typen $T_{21}$ des ersten Elements des zweiten Paartypen ist und der Typ $T_{12}$ des zweiten Elements des ersten Paartypen ein Subtyp des Typen $T_{22}$ des zweiten Elements des zweiten Paartypen ist. Dadurch wird es ermöglicht, einen Paartypen dort einzusetzen, wo ein Paartyp erwartet wird, dessen Elemente Supertypen der Typen der Elemente des vorhandenen Paartypen sind. Die vorstehende Vorschrift wird vorzugsweise durch eine Subtypenregel realisiert, die angewendet wird, um zu überprüfen, ob ein Paartyp ein Subtyp eines anderen Paartypen ist. Eine solche Regel SUB-PAIR ist nachfolgend beispielhaft angegeben.

$$\frac{T_{11} <: T_{21} \quad T_{12} <: T_{22}}{T_{11} \times T_{12} <: T_{21} \times T_{22}} \text{(SUB-PAIR)}$$

Gemäß einer vorteilhaften Ausführungsform wird bei der Typüberprüfung einem Ausdruck e, dem ein erster Typ T zugeordnet wird, genau dann ein beliebiger zweiter Typ T' zugeordnet, wenn der zweite Typ T' wohlgeformt ist und wenn der erste Typ T ein Subtyp des zweiten Typen T' ist. Die Definition der Subtypbeziehungen ermöglicht es also, einem Ausdruck, dem ein Typ zugeordnet ist, einen anderen Typen zuzuordnen, welcher ein Supertyp des zweiten Typen ist. Das Erfordernis, dass der zuzuordnende Supertyp T' ein wohlgeformter Typ sein muss, stellt dabei sicher, dass ein syntaktisch bestehender Supertyp nicht zugeordnet wird, wenn er nicht wohlgeformt ist, so dass beispielsweise kein Funktionstyp mit einer dynamischen Bindungszeit zugeordnet werden kann.

Die vorstehende Vorschrift ist bevorzugt durch eine Subtypzuordnungsregel realisiert, die vorzugsweise überprüft wird, wenn einem Ausdruck ein Typ zugeordnet worden ist, welcher eine Voraussetzung einer für die Typisierung eines übergeordneten Ausdrucks zu überprüfenden Vorschrift nicht erfüllt, um dem Ausdruck möglichst einen Supertypen zuzuordnen, der die Voraussetzung erfüllt. Ist dies nicht möglich, wird vorzugsweise ein Typfehler ausgegeben und eine Fehlermeldung erzeugt. Andernfalls wird der passende Typ zugeordnet, die auf den übergeordneten Ausdruck anzuwendende Typzuordnungsregel angewendet und die Typüberprüfung dadurch fortgesetzt. Eine wie vorstehend beschriebene Subtypzuordnungsregel T-SUB ist nachfolgend beispielhaft angegeben:

$$\frac{\Gamma \vdash e : T \quad T' : \star \quad T <: T'}{\Gamma \vdash e : T'} \text{(T-SUB)}$$

Die Definition der Subtypen führt somit dazu, dass bei der Typüberprüfung ein Ausdruck eine durch eine Typzuordnungsvorschrift an seinen Typen gestellte Anforderung immer auch dann erfüllen kann, wenn der ihm zugeordnete Typ ein Subtyp des durch die Typzuordnungsregel geforderten Typen ist und der geforderte Typ wohlgeformt ist. Wenn in der vorliegenden Beschreibung als Voraussetzung der erfolgreichen Anwendung einer Typzuordnungsvorschrift beschrieben ist, dass einem oder mehreren Ausdrücken ein bestimmter Typ zugeordnet wird, ist dies so zu verstehen, dass die jeweilige Vorschrift stattdessen auch verlangen kann, dass den jeweiligen Ausdrücken ein Typ zugeordnet werden muss, der mit dem jeweils bestimmten Typen identisch ist oder ein wohlgeformter Subtyp des bestimmten Typen ist.

Wie vorstehend beschrieben, ist das Typsystem vorzugsweise durch einen Satz von Regeln definiert, welche angewendet werden, um jedem Ausdruck des Programms einen Typen zuzuordnen. Dabei ist vorzugsweise jeder Art von Ausdruck, d.h. insbesondere Funktionsdefinitionen, Paardefinitionen, Funktionsanwendungen, bedingten Ausdrücken etc., eine Typzuordnungsregel zugeordnet, anhand der der Ausdruck überprüft wird, d.h. deren Voraussetzungen überprüft werden und anhand der dem Ausdruck ein Typ zugeordnet wird, wenn die Voraussetzungen der Regel erfüllt sind. Die vorstehend beschriebene Subtypzuordnungsregel stellt eine zusätzliche Regel dar, die vorzugsweise dann auf einen Unterausdruck eines gerade anhand einer zu überprüfenden Typzuordnungsregel überprüften übergeordneten Ausdrucks angewendet wird, wenn der Unterausdruck eine in der Typzuordnungsregel für den übergeordneten Ausdruck spezifizierte Voraussetzung bezüglich des Typen des Unterausdrucks nicht erfüllt.

Gemäß einer vorteilhaften Ausführungsform wird bei der Typüberprüfung einem bedingten Ausdruck, dessen Bedingung durch einen ersten Unterausdruck $e_p$ angegeben ist und dessen wenigstens zwei Fälle durch einen zweiten und einen dritten Unterausdruck e, e' angegeben sind, wenn dem ersten Unterausdruck $e_p$ ein erster Typ Mbool mit einem Bool'schen Grundtyp bool und einer beliebigen ersten Bindungszeit M zugeordnet wird und wenn dem zweiten und dritten Unterausdruck e, e' jeweils ein identischer zweiter Typ M C mit einem beliebigen identischen Grundtypen C und der ersten Bindungszeit M zugeordnet wird, der zweite Typ M C, d.h. der gemeinsame Typ des zweiten und dritten Unterausdrucks e, e', zugeordnet.

Die Typisierung eines bedingten Ausdrucks bzw. Konditionals setzt also voraus, dass die die Fälle bzw. Zweige des Konditionals bildenden Unterausdrücke dieselbe Bindungszeit haben wie der die Bedingung definierende Unterausdruck und die die Fälle bildenden Unterausdrücke gleichzeitig beide denselben Typen haben. In Anbetracht von ggf. definierten Subtypbeziehungen sind diese Voraussetzungen äquivalent dazu, dass die die beiden Fälle bildenden Unterausdrücke einen gemeinsamen Supertypen haben, der dieselbe Bindungszeit hat wie der die Bedingung bildende Ausdruck.

Die vorstehende Vorschrift ist vorzugsweise durch eine Typzuordnungsregel realisiert, die überprüft wird, wenn ein bedingter Ausdruck zu typisieren ist. Eine solche Regel T-COND ist nachfolgend beispielhaft angegeben.

$$\frac{\Gamma \vdash e_p : M\,\texttt{bool} \quad \Gamma \vdash e : M\,C \quad \Gamma \vdash e' : M\,C}{\Gamma \vdash \texttt{if } e_p \texttt{ then } e \texttt{ else } e' : M\,C} \text{ (T-COND)}$$

Beispielsweise wird ein bedingter Ausdruck, dessen Bedingung durch einen ersten Unterausdruck angegeben ist und dessen wenigstens zwei Fälle durch einen zweiten und einen dritten Unterausdruck angegeben sind, nicht akzeptiert, wenn dem Bedingungsausdruck eine dynamische Bindungszeit zugeordnet wird und zumindest einem der beiden Fälle ein Funktionstyp als Grundtyp oder ein zusammengesetzter Grundtyp, der einen Funktionstypen enthält, zugeordnet wird.

Eine weitere Ausführungsform sieht vor, dass bei der Typüberprüfung einem Ausdruck $e_1 e_2$, der eine Anwendung definiert, deren Operator durch einen ersten Unterausdruck $e_1$ gebildet ist und deren eine oder mehrere Operanden, welche auch als Argumente bezeichnet werden, jeweils durch einen weiteren Unterausdruck $e_2$ gebildet sind, genau dann, wenn dem Operator ein Funktionstyp $T_2 {\rightarrow} T$ zugeordnet wird und wenn den ein oder mehreren Operanden jeweils ein Typ $T_2$ zugeordnet wird, der mit dem korrespondierenden Definitionstypen des Funktionstypen $T_2 {\rightarrow} T$ identisch ist bzw. ein Subtyp desselben ist, der Zieltyp $T$ des Funktionstypen $T_2 {\rightarrow} T$ als Typ zugeordnet wird. Indem überprüft wird, ob dem Operanden ein Typ zugeordnet wird, der dem korrespondierenden Definitionstypen des Funktionstypen entspricht, wird sichergestellt, dass ein Typfehler auftritt, wenn eine Funktion auf einen Operanden angewendet wird, der nicht dem entsprechenden Definitionstypen entspricht, wobei der Definitionstyp, wie vorstehend beschrieben, vorzugsweise durch eine explizite Typannotation bestimmt werden kann.

Beispielsweise kann ein Ausdruck, der eine Anwendung einer Funktion definiert, dann nicht akzeptiert werden, wenn ein Definitionstyp der anzuwendenden Funktion eine statische Bindungszeit aufweist und dem entsprechenden Operanden, auf den die Funktion angewendet wird, eine dynamische Bindungszeit zugeordnet wird.

Vorzugsweise ist die vorstehende Vorschrift durch eine Typzuordnungsregel realisiert, welche überprüft wird, wenn ein eine Funktionsanwendung definierender Ausdruck zu typisieren ist. Eine solche Regel T-APP ist nachfolgend beispielhaft angegeben:

$$\frac{\Gamma \vdash e_1 : S\,(T_2 \rightarrow T) \quad \Gamma \vdash e_2 : T_2}{\Gamma \vdash e_1\, e_2 : T} \text{ (T-APP)}$$

Vorzugsweise weist das Programm eine speziell gekennzeichnete Definition einer Einstiegsfunktion auf, bei der die Auswertung des Programms bei der letztendlichen direkten Ausführung auf einem Computersystem beginnt. Die Einstiegsfunktion weist vorzugsweise eine oder mehrere Funktionsvariablen auf, die dem Programm bei dessen Aufruf durch ein anderes Programmen übergebene Werte annehmen können, so dass das Programm laufzeitabhängige Ergebnisse erzeugen kann. Vorzugsweise wird auch die Definition der Einstiegsfunktion, wie vorstehend in Bezug auf Funktionen allgemein beschrieben, darauf überprüft, ob sie einen zulässigen Typen aufweist. Als zusätzliche Anforderung an die Einstiegsfunktion wird vorzugsweise überprüft und die Einstiegsfunktion nur akzeptiert, wenn diese keine Funktionsvariablen definiert, die eine statische Bindungszeit aufweisen, d.h. dass insbesondere gefordert sein kann, dass für die einen oder mehreren Variablen der Einstiegsfunktion ein Typ mit einer dynamischen Bindungszeit annotiert ist. Dies ist notwendig, um eine zutreffende Bindungszeitanalyse zu ermöglichen, da die Übergabewerte an die Einstiegsfunktion, d.h. das Programm insgesamt, durch ein aufrufendes Programm im Allgemeinen vor der Laufzeit unbekannt sind. Dementsprechend darf die Einstiegsfunktion vorzugsweise keine Funktionsvariablen definieren, die einen Funktionstypen aufweisen, da ein Funktionstyp nur mit statischer Bindungszeit zulässig ist, die statische Bindungszeit für die Funktionsvariablen der Einstiegsfunktion aber aus den vorstehenden Gründen bevorzugt nicht zulässig ist. Ferner wird vorzugsweise überprüft und die Einstiegsfunktion nur akzeptiert, wenn deren Rumpf ein Typ zugeordnet wird, der kein Funktionstyp ist bzw. der, z.B. im Falle eines zusammengesetzten Typen, keinen Funktionstypen enthält.

Weiterer Gegenstand der Erfindung ist ein Verfahren zur Transformation eines Computerprogramms, das in einer Programmiersprache vorliegt, welche Funktionen erster Klasse unterstützt, bei dem eine Typüberprüfung des Programms oder zumindest eines Teils des Programms durchgeführt wird, um jedem Ausdruck des Programms oder Teils des Programms einen Typen zuzuordnen, der aus einem Grundtypen und einer Bindungszeit besteht, wobei die Menge der Grundtypen mindestens Basistypen zur Beschreibung einfacher Werte und einen Funktionstypen zur Beschreibung von Funktionen umfasst und die Menge der Bindungszeiten mindestens eine statische Bindungszeit und eine dynamische Bindungszeit umfasst, wobei bei der Typüberprüfung ein Funktionstyp nur gemeinsam mit der statischen Bindungszeit akzeptiert wird. Wenn das Programm oder der Teil des Programms von der Typüberprüfung akzeptiert wird, werden durch partielle Auswertung des Programms oder des Teils des Programms alle in dem Programm oder dem Teil des Programms enthaltenen Funktionen erster Klasse eliminiert. Wenn das Programm z.B. einen Ausdruck enthält, der eine Anwendung einer Funktion erster Klasse darstellt, wird der Ausdruck durch partielle Auswertung in einen Ausdruck umgewandelt, der keine Anwendung einer Funktion erster Klasse enthält.

Das Verfahren zur Transformation eines Computerprogramms umfasst eine wie vorstehend beschriebene Typüberprüfung des Programms. Die vorstehend in Bezug auf das Verfahren zur Überprüfung und/oder Transformation eines Computerprogramms beschriebenen vorteilhaften Ausführungsformen und Vorteile gelten entsprechend für das Verfahren zur Transformation des Computerprogramms.

Das Verfahren umfasst, dass das Programm, wenn die Typüberprüfung erfolgreich ist, partiell ausgewertet wird, um das Programm in ein äquivalentes Programm ohne Funktionen erster Klasse umzuwandeln. Das partiell ausgewertete Programm erfüllt somit die Funktionalität des ursprünglichen Programms und kann gleichzeitig mit geringerer Laufzeit ausgeführt werden, da die mit der Verwendung von Funktionen erster Klasse verbundenen zusätzlichen Vorgänge wie die Dereferenzierung von Funktionszeigern und die dynamische Speicherverwaltung nicht notwendig sind. Das Programm kann dementsprechend sogar auf einer Hardware ausgeführt werden, die die vorstehenden Funktionen nicht unterstützt.

Somit können Programme unter Verwendung von Funktionen erster Klasse entwickelt werden, wodurch die Effizienz der Entwicklung beispielsweise durch Wiederverwendung von Funktionen und einen modularen Programmaufbau gesteigert wird, ohne dass bei der letztendlichen Ausführung des resultierenden Programms auf der Hardware Leistungseinbußen aufgrund von Funktionen erster Klasse auftreten. Durch das beschriebene Überprüfungsverfahren kann mit geringem Zeitaufwand zuverlässig festgestellt werden, ob ein gegebenes Programm in der beschriebenen Weise transformierbar ist, wobei andernfalls eine präzise Aussage über die Ursache des Fehlers in dem Programm getroffen und dem Benutzer angezeigt wird, so dass der Fehler leicht behoben werden kann und die Programmierung zulässiger, d.h. transformierbarer, Programme mit geringem Aufwand möglich ist.

Die partielle Auswertung kann das Anwenden der Semantik der Programmiersprache auf die in dem Programm enthaltenen Ausdrücke umfassen, wobei Unterausdrücke ausgewertet werden, deren Wert statisch bekannt ist. Die partielle Auswertung kann z.B. die Inline-Expansion des Rumpfs einer Funktion aus einer Funktionsdefinition in einem die Funktion aufrufenden Anwendungs-Ausdruck umfassen. Geeignete Verfahren zur partiellen Auswertung sind an sich bekannt und beispielsweise in "Partial evaluation and automatic program generation" von Neil Jones, Prentice Hall International 1993 beschrieben.

Zunächst, d.h. insbesondere vor einer endgültigen Kompilierung und/oder Assemblierung, kann das ursprüngliche Programm in ein partiell ausgewertetes Programm übersetzt werden, das in einer Programmiersprache vorliegt, die der Programmiersprache des ursprünglichen Programms entsprechen kann und/oder die eine höhere und/oder auf der Hochsprachenebene angesiedelte Programmiersprache sein kann. Die partielle Auswertung kann durch Interpretation des ursprünglichen Computerprogramms durchgeführt werden.

Das partiell ausgewertete Programm bzw. das Programm mit dem partiell ausgewerteten Ausdruck wird vorzugsweise in einen von einem Zielcomputersystem direkt ausführbaren Maschinencode, bevorzugt auf Befehlssatzebene, übersetzt. Dazu kann das partiell ausgewertete Programm durch einen Compiler kompiliert und anschließend gegebenenfalls durch einen Assembler assembliert werden. Anschließend kann das assemblierte Programm durch ein Zielcomputersystem direkt ausgeführt werden. Bei dem Zielcomputersystem kann es sich um ein anderes Computersystem handeln, als das, auf dem die Überprüfung und/oder die partielle Auswertung und/oder Kompilierung und/oder Assemblierung durchgeführt wird, prinzipiell kann aber auch dasselbe Computersystem verwendet werden. Gemäß einer Ausführungsform wird das Programm mit dem partiell ausgewerteten Ausdruck bzw. das partiell ausgewertete Programm in einen Maschinencode für eine Hardwareplattform übersetzt, die keine Unterstützung für Funktionszeiger bietet und/oder die keine Unterstützung für eine dynamische Speicherverwaltung bietet.

Im Ergebnis erfolgt somit eine vollständige Auswertung des ursprünglichen Computerprogramms entsprechend der der Programmiersprache des ursprünglichen Programms zugrunde liegenden Auswertungssemantik, wobei zunächst eine statische, d.h. zur Übersetzungszeit erfolgende, partielle Auswertung erfolgt und anschließend die restliche dynamische, d.h. zur Laufzeit bzw. Ausführungszeit erfolgende, Auswertung des partiell ausgewerteten Programms, wobei die restliche Auswertung bevorzugt durch direkte Ausführung eines aus dem partiell ausgewerteten Programm erzeugten Maschinencodes erfolgt.

Das bzw. die erfindungsgemäßen Verfahren können jeweils prinzipiell auf einem oder mehreren, z.B. als Personal Computer ausgebildeten, Computersystemen durchgeführt werden. Bei dem Programm handelt es sich vorzugsweise um ein Shaderprogramm zur 3D-Visualisierung, welches, ggf. nach der Transformation, von einem Prozessor, insbesondere einem Grafikprozessor, direkt ausgeführt werden kann, um eine dreidimensionale Grafik zu erzeugen und vorzugsweise auf einer Anzeigeeinheit anzuzeigen, während die Überprüfung, Transformation, Kompilierung und/oder Assemblierung auf einem Allzweck-Prozessor durchgeführt werden kann. Die Erzeugung der Grafiken kann insbesondere in Echtzeit erfolgen.

Nachfolgend wird die Erfindung anhand mehrerer Beispiele erläutert.

Die Syntax der Programmiersprache, die vorzugsweise auf dem λ-Kalkül basiert, ist eingangs erläutert und in Tabelle 1 dargestellt. Basierend auf der Syntax ist eine Auswertungssemantik gemäß den nachstehend in Tabelle 2 wiedergegebenen Semantikregeln der Programmiersprache definiert.

## Tabelle 2 (Semantik):

$$\boxed{e \Rightarrow e}$$

$$\frac{e_1 \Rightarrow e_1'}{e_1\, e_2 \Rightarrow e_1'\, e_2} \text{ (E-App1)} \qquad \frac{e_2 \Rightarrow e_2'}{v_1\, e_2 \Rightarrow v_1\, e_2'} \text{ (E-App2)}$$

$$\lambda x{:}T.\, e\, v \Rightarrow e[x \mapsto v] \text{ (E-AbsApp)} \qquad \frac{\delta(v_1, v_2) = v}{v_1\, v_2 \Rightarrow v} \text{ (E-PrfApp)}$$

$$\frac{e_1 \Rightarrow e_1'}{(e_1, e_2) \Rightarrow (e_1', e_2)} \text{ (E-Tup1)} \qquad \frac{e_2 \Rightarrow e_2'}{(v_1, e_2) \Rightarrow (v_1, e_2')} \text{ (E-Tup2)}$$

$$\frac{e \Rightarrow e'}{\text{fst } e \Rightarrow \text{fst } e'} \text{ (E-FstArg)} \qquad \text{fst } (v_1, v_2) \Rightarrow v_1 \text{ (E-Fst)}$$

$$\frac{e \Rightarrow e'}{\text{snd } e \Rightarrow \text{snd } e'} \text{ (E-SndArg)} \qquad \text{snd } (v_1, v_2) \Rightarrow v_2 \text{ (E-Snd)}$$

$$\frac{e_1 \Rightarrow e_1'}{\text{if } e_1 \text{ then } e_2 \text{ else } e_3 \Rightarrow \text{if } e_1' \text{ then } e_2 \text{ else } e_3} \text{ (E-CondPred)}$$

$$\text{if true then } e_2 \text{ else } e_3 \Rightarrow e_2 \text{ (E-CondTrue)}$$

$$\text{if false then } e_2 \text{ else } e_3 \Rightarrow e_3 \text{ (E-CondFalse)}$$

Die Notation $e \Rightarrow e$ bedeutet, dass der linke Ausdruck e zu dem rechten Ausdruck e ausgewertet wird. Die angegebene Semantik entspricht einer Call-by-Value-Semantik. In der Auswertungsregel E-ABSAPP für Anwendungen $e_1 e_2$ von Funktionen in Tabelle 2 wird die Substitutionsformel $e[x \mapsto v]$ verwendet. Diese bedeutet, dass jedes freie Auftreten der Variablen x in dem Ausdruck e durch den Wert v ersetzt wird.

Nachstehend in den Tabellen 3a, b, c, d sind die der Typüberprüfung zugrunde liegenden Typisierungsregeln angegeben. Die Regeln in Tabelle 3a bestimmen die lineare Ordnung der Bindungszeiten, die Regeln in Tabelle 3b bestimmen die Wohlgeformtheit von Typen, die Regeln in Tabelle 3c bestimmen Subtyp-Beziehungen zwischen verschiedenen Typen und zwischen verschiedenen Grundtypen und die Regeln in Tabelle 3d bestimmen die Typzuordnung zu den Programmausdrücken.

## Tabelle 3a (lineare Ordnung Bindungszeiten)

$$\boxed{M <: M}$$

$$M <: M \quad \text{(B-Refl)}$$

$$S <: D \quad \text{(B-Static)}$$

## Tabelle 3b (Wohlgeformtheitsregeln):

$$\boxed{T : \star}$$

$$M\ B : \star \quad \text{(WF-Base)}$$

$$\frac{M_1\ C_1 : \star \quad M_2\ C_2 : \star}{S\ (M_1\ C_1 \to M_2\ C_2) : \star} \quad \text{(WF-Fun)}$$

$$\frac{M_1\ C_1 : \star \quad M_2\ C_2 : \star \quad M <: M_i}{M\ (M_1\ C_1 \times M_2\ C_2) : \star} \quad \text{(WF-Pair)}$$

## Tabelle 3c (Subtypisierungsregeln):

$$\boxed{T <: T}\ \boxed{C <: C}$$

$$\frac{M <: M' \quad C <: C'}{M\ C <: M'\ C'} \quad \text{(Sub-Type)}$$

$$B <: B \quad \text{(Sub-Base)}$$

$$\frac{T_{21} <: T_{11} \quad T_{12} <: T_{22}}{T_{11} \to T_{12} <: T_{21} \to T_{22}} \quad \text{(Sub-Fun)}$$

$$\frac{T_{11} <: T_{21} \quad T_{12} <: T_{22}}{T_{11} \times T_{12} <: T_{21} \times T_{22}} \quad \text{(Sub-Pair)}$$

## Tabelle 3d (Typzuordnungs-Regeln):

$$\boxed{\Gamma \vdash e : T}$$

$$\frac{\Gamma \vdash e : T \quad T' : \star \quad T <: T'}{\Gamma \vdash e : T'} \text{ (T-Sub)}$$

$$\frac{x : T \in \Gamma}{\Gamma \vdash x : T} \text{ (T-Var)}$$

$$\frac{T \in \text{type}(c)}{\Gamma \vdash c : T} \text{ (T-Const)}$$

$$\frac{T : \star \quad \Gamma, x : T \vdash e : T'}{\Gamma \vdash \lambda x {:} T.\, e : S\ (T \to T')} \text{ (T-Lam)}$$

$$\frac{\Gamma \vdash e_1 : S\ (T_2 \to T) \quad \Gamma \vdash e_2 : T_2}{\Gamma \vdash e_1\, e_2 : T} \text{ (T-App)}$$

$$\frac{\Gamma \vdash e_1 : T_1 \quad \Gamma \vdash e_2 : T_2}{\Gamma \vdash (e_1, e_2) : S\ (T_1 \times T_2)} \text{ (T-Pair)}$$

$$\frac{\Gamma \vdash e : M\ (T_1 \times T_2)}{\Gamma \vdash \texttt{fst}\ e : T_1} \text{ (T-Prj1)}$$

$$\frac{\Gamma \vdash e : M\ (T_1 \times T_2)}{\Gamma \vdash \texttt{snd}\ e : T_2} \text{ (T-Prj2)}$$

$$\frac{\Gamma \vdash e_p : M\,\texttt{bool} \quad \Gamma \vdash e : M\,C \quad \Gamma \vdash e' : M\,C}{\Gamma \vdash \texttt{if}\ e_p\ \texttt{then}\ e\ \texttt{else}\ e' : M\,C} \text{ (T-Cond)}$$

Die Regeln für die Ordnung der Bindungszeiten gemäß Tabelle 3a sowie die Regeln für die Überprüfung der Wohlgeformtheit von Typen gemäß Tabelle 3b und die Regeln für die Überprüfung des Vorliegens einer Subtyp-Beziehung mit Ausnahme der Regel SUB-BASE sind in der vorstehenden allgemeinen Beschreibung erläutert. Die Regel SUB-Base beschreibt, dass ein Basistyp stets nur sich selbst als Super- bzw. Subtyp hat, so dass Basistypen im vorliegenden Ausführungsbeispiel nicht miteinander austauschbar sind.

Die Typzuordnungsregeln gemäß Tabelle 3d sind mit Ausnahme der Regeln T-VAR, T-CONST, T-PRJ1 und T-PRJ2 in der vorstehenden allgemeinen Beschreibung erläutert.

Die Regel T-VAR ordnet dem Auftreten einer Variable x in einem Ausdruck den Typen T zu, wenn der jeweilige Kontext $\Gamma$ eine entsprechende Typzuordnung bzw. Typannotation x:T enthält. Die Regel T-VAR dient also dazu, in dem Kontext $\Gamma$ nachzusehen, ob für die Variable x in dem Kontext $\Gamma$ der Typ T annotiert ist und der Variablen x in diesem Fall diesen Typen T zuzuordnen. Die Regel T-VAR wird angewendet, wenn eine Variable in einem übergeordneten Ausdruck auftritt und deren Typ für die Anwendung einer für die Typisierung des übergeordneten Ausdrucks anzuwendenden Typisierungsregel erheblich ist.

Die Regeln T-PRJ 1 und T-PRJ2 sind zur Typisierung von Ausdrücken anzuwenden, die eine Projektion eines Paares darstellen, d.h. auf Ausdrücke der Art fst e, snd e, wobei der Ausdruck fst e die Projektion auf das erste Element $e_1$ eines Paares $(e_1, e_2)$ bedeutet und der Ausdruck snd e die Projektion auf das zweite Element $e_2$ eines Paares $(e_1, e_2)$ bedeutet (siehe die Auswertungsregeln E-FSTARG, E-FST, E-SNDARG, E-SND in Tabelle 2). Die Typzuordnungsregeln T-PRJ1 und T-PRJ2 bestimmen, dass einem solchen Ausdruck der Typ zugeordnet wird, der dem jeweiligen, d.h. dem ersten bzw. zweiten, Element des Paares zugeordnet wird.

Die Regel T-CONST wird auf konstante Symbole c angewendet und ordnet einem konstanten Symbol c einen Typen T zu, der in der Zuordnungstabelle type(c) (siehe nachfolgende Tabelle 4) als möglicher Typ dieses Symbols angegeben ist.

Tabelle 4 (Typzuordnungstabelle type(c) für konstante Symbole):

$$c \in \mathbb{B}. \ . \ \text{type}(c) = \{S \text{ bool}\}$$

$$c \in \mathbb{Z}. \ . \ \text{type}(c) = \{S \text{ int}\}$$

$$\text{type}(\text{not}) = \{S(S\text{bool}\rightarrow S\text{bool}), S(D\text{bool}\rightarrow D\text{bool})\}$$

$$c \in \{\text{and}, \text{or}\}. \text{type}(c) \quad = \quad \left\{ \begin{array}{l} S\left(S\left(S\text{ bool} \times S\text{ bool}\right) \rightarrow S\text{ bool}\right), \\ S\left(D\left(D\text{ bool} \times D\text{ bool}\right) \rightarrow D\text{ bool}\right) \end{array} \right\}$$

$$c \in \{=, <\}. \text{type}(c) \quad = \quad \left\{ \begin{array}{l} S\left(S\left(S\text{ int} \times S\text{ int}\right) \rightarrow S\text{ bool}\right), \\ S\left(D\left(D\text{ int} \times D\text{ int}\right) \rightarrow D\text{ bool}\right) \end{array} \right\}$$

$$c \in \{+, -\}. \text{type}(c) \quad = \quad \left\{ \begin{array}{l} S\left(S\left(S\text{ int} \times S\text{ int}\right) \rightarrow S\text{ int}\right), \\ S\left(D\left(D\text{ int} \times D\text{ int}\right) \rightarrow D\text{ int}\right) \end{array} \right\}$$

In Tabelle 4 sind die Typen für Bool'sche Konstanten aus der Menge B (true und false), für ganzzahlige Zahlenwerte aus der Menge Z, d.h. Konstanten vom Typ int (..., -1, 0, 1, ...), und für die Operatoren not, and, or, =, <, +, - angegeben, welche konstante primitive Funktionen darstellen, die in der üblichen Weise definiert sind.

Da konstante Symbole nicht weiter ausgewertet werden und deren Werte statisch bekannt sind, ist den konstanten Symbolen die statische Bindungszeit S zugeordnet. Für die funktionswertigen Operatoren sind in type (c) jeweils zwei unterschiedliche Funktionstypen vorgesehen, nämlich jeweils zum einen ein Funktionstyp, der eine Funktion beschreibt, die von einem statischen Typen auf einen statischen Typ abbildet, und zum anderen ein Funktionstyp, der eine Funktion beschreibt, die von einem dynamischen Typen auf einen dynamischen Typen abbildet. Dadurch wird der Tatsache Rechnung getragen, dass die primitiven Funktionen sowohl auf statische Argumente angewendet werden können, in welchem Fall sie statische Werte liefern, als auch auf dynamische Werte, in welchem Fall sie dynamische Werte liefern. Bei der Typüberprüfung wird der jeweiligen Operatorkonstante derjenige Typ zugeordnet, welcher von der auf den jeweils übergeordneten Ausdruck, der den Operator enthält, anzuwendenden Typisierungsregel erwartet wird, um zu überprüfen, ob die Typisierungsregel erfolgreich angewendet werden kann.

In der nachfolgenden Tabelle 5 sind die Auswertungsregeln angegeben, gemäß denen die partielle Auswertung erfolgt.

Tabelle 5 (Regeln partielle Auswertung):

$$P_{\mathcal{E}}[c] = c$$
$$P_{\mathcal{E}}[x] = x$$
$$P_{\mathcal{E}}[\lambda x{:}T.e] = \lambda x{:}T.P_{\mathcal{E}}[e]$$

$$\mathcal{PE}\left[\!\left[e_1\, e_2\right]\!\right] \quad = \quad \left\{ \begin{array}{ll} \mathcal{PE}\left[\!\left[e[x \mapsto e_2]\right]\!\right] & \text{if } \mathcal{PE}\left[\!\left[e_1\right]\!\right] = \lambda x{:}T.e \\ c & \text{if } \delta(\mathcal{PE}\left[\!\left[e_1\right]\!\right], \mathcal{PE}\left[\!\left[e_2\right]\!\right]) = c \\ \mathcal{PE}\left[\!\left[e_1\right]\!\right] \mathcal{PE}\left[\!\left[e_2\right]\!\right] & \text{else} \end{array} \right.$$

$$\mathcal{PE}\left[\!\left[(e_1, e_1)\right]\!\right] \quad = \quad (\mathcal{PE}\left[\!\left[e_1\right]\!\right], \mathcal{PE}\left[\!\left[e_2\right]\!\right])$$

$$\mathcal{PE}\left[\!\left[\text{fst } e\right]\!\right] \quad = \quad \left\{ \begin{array}{ll} e_1 & \text{if } \mathcal{PE}\left[\!\left[e\right]\!\right] = (e_1, e_2) \\ \text{fst } \mathcal{PE}\left[\!\left[e\right]\!\right] & \text{else} \end{array} \right.$$

$$\mathcal{PE}\left[\!\left[\text{snd } e\right]\!\right] \quad = \quad \left\{ \begin{array}{ll} e_2 & \text{if } \mathcal{PE}\left[\!\left[e\right]\!\right] = (e_1, e_2) \\ \text{snd } \mathcal{PE}\left[\!\left[e\right]\!\right] & \text{else} \end{array} \right.$$

(fortgesetzt)

$$\mathcal{PE}\,[\![\text{if } e_p \text{ then } e_t \text{ else } e_c]\!] \;=\; \begin{cases} \mathcal{PE}\,[\![e_t]\!] & \text{if } \mathcal{PE}\,[\![e_p]\!] = \text{true} \\ \mathcal{PE}\,[\![e_c]\!] & \text{if } \mathcal{PE}\,[\![e_p]\!] = \text{false} \\ \text{if } \mathcal{PE}\,[\![e_p]\!] \text{ then } \mathcal{PE}\,[\![e_t]\!] \text{ else } \mathcal{PE}\,[\![e_c]\!] & \text{else} \end{cases}$$

Das Symbol $P_{\mathcal{E}}[e]$ bedeutet, dass der Ausdruck e partiell ausgewertet wird, und die rechte Seite der Gleichungen gibt jeweils das Ergebnis der partiellen Auswertung an. Die geschweiften Klammern auf der rechten Seite der Gleichungen dienen jeweils der Fallunterscheidung. Die der partiellen Auswertung zugrunde liegende Semantik entspricht der in Tabelle 2 angegebenen Semantik der Programmiersprache. Durch die Formel $\delta(e_1, e_2)$ wird die Anwendung eines Funktionssymbols bzw. Operators auf ein oder mehrere konstante Argumente durch einen konstanten Wert ersetzt, d.h. z.B. $\delta(\text{not, true}) = \text{false}$ und $\delta(+, (41, 1)) = 42$.

Nachstehend ist die Typisierung von Programmen unter Verwendung der vorstehenden Regeln und Tabellen anhand mehrerer Beispiele erklärt.

Beispiel 1:

Das erste Beispiel betrifft die in dem eingangs angegebenen Programmcode 1 definierten Funktionen add, sub und apply. Das nachfolgende Regel-Anwendungsdiagramm 1 zeigt, welche Typisierungsregeln auf welche Ausdrücke angewendet werden, um diese Funktionen zu typisieren.

Für die Typüberprüfung wird das in dem Programmcode 1 in einer C-artigen Syntax dargestellte Programm in der in Tabelle 1 definierten λ-Syntax dargestellt. In dieser Darstellung ergeben sich die Definitionen der Funktionen add, sub und apply zu:

Programmcode 4:

$$\text{add} = \lambda a\!:\!D\,\text{int}.\,\lambda b\!:\!D\,\text{int}.\,+\,(a,b)$$

$$\text{sub} = \lambda a\!:\!D\,\text{int}.\,\lambda b\!:\!D\,\text{int}.\,-\,(a,b)$$

$$\text{apply} = \lambda f\!:\!S\,(D\,\text{int} \to S\,(D\,\text{int} \to D\,\text{int})).\,\lambda a\!:\!D\,\text{int}.\,\lambda b\!:\!D\,\text{int}.\,(f\,a)\,b$$

Die in dem ursprünglichen Programmcode 1 als Funktion mit drei Funktionsvariablen f, a, b dargestellte Funktion apply ist in dem A-Kalkül durch drei ineinander geschachtelte Funktionen mit jeweils einer Funktionsvariablen f bzw. a bzw. b dargestellt, da in der vorliegenden Darstellung von unären Funktionen ausgegangen wird. Ebenso sind die Funktionen add und sub jeweils als zwei ineinander geschachtelte Funktionen mit jeweils einer Funktionsvariablen a bzw. b dargestellt. Für die Variablen a und b, für die zwar explizit ein Grundtyp (int.), jedoch keine Bindungszeit annotiert ist, wird die dynamische Bindungszeit angenommen, da für den Grundtypen int die dynamische Bindungszeit grundsätzlich zulässig ist. Für die Variable f der Funktion apply, für die ein Funktionstyp als Grundtyp aber keine Bindungszeit explizit annotiert ist, wird die Bindungszeit S angenommen, da für Funktionstypen nur die statische Bindungszeit zulässig ist. Prinzipiell könnte der Benutzer im Rahmen des Verfahrens auch aufgefordert werden, eine explizite Bindungszeitannotation für die Variablen, a, b und/oder f vorzunehmen. Der in der C-Syntax in Programmcode 1 ebenfalls annotierte Zieltyp der Funktionen add, sub und apply ist im vorliegenden Ausführungsbeispiel unbeachtlich und wird ignoriert.

# Regelanwendungsdiagramm 1 (Teil 1/3)

**add**

$add = \lambda a{:}D\,int.\,\lambda b{:}D\,int.\,+\,(a,b)$

$$(\text{T-Const})\ \frac{S\,(D\,(D\,int \times D\,int) \to D\,int) \in type(+)}{a : D\,int, b : D\,int \vdash + : S\,(D\,(D\,int \times D\,int) \to D\,int)}\ \dots$$

**sub**

$sub = \lambda a{:}D\,int.\,\lambda b{:}D\,int.\,-\,(a,b)$ Ähnlich.

**apply**

Der Kalkül unterstützt nur unäre Funktionsdefinitionen. Aus apply wird
$apply = \lambda f{:}S\,(D\,int \to S\,(D\,int \to D\,int)).\,\lambda a{:}D\,int.\,\lambda b{:}D\,int.\,(f\,a)\,b$

$$(\text{WF-Base})\ \frac{\dfrac{(\text{WF-Base})\ \dfrac{}{D\,int : \star}\quad (\text{WF-Base})\ \dfrac{}{D\,int : \star}}{(\text{WF-Base})\ \dfrac{}{D\,int : \star}\qquad S\,(D\,int \to D\,int) : \star}}{\dfrac{S\,(D\,int \to S\,(D\,int \to D\,int)) : \star}{\cdot \vdash \lambda f{:}S\,(D\,int \to S\,(D\,int \to D\,int)).}}\ \dots$$

where $\Gamma = f : S\,(D\,int \to S\,(D\,int \to D\,int)), a : D\,int, b : D\,int$

## Regelanwendungsdiagramm 1 (Teil 2/3)

$$\cfrac{\text{(WF-Base)}\ \cfrac{}{D\,\text{int}:\star}\quad \cfrac{\text{(WF-Base)}\ \cfrac{}{D\,\text{int}:\star}\quad \cfrac{\text{s. unten}}{a:D\,\text{int},b:D\,\text{int}\vdash +\,(a,b):D\,\text{int}}\text{(T-App)}}{\cfrac{a:D\,\text{int}\vdash \lambda b:D\,\text{int}.+\,(a,b):S\,(D\,\text{int}\to D\,\text{int})}{\cdot\vdash \lambda a:D\,\text{int}.\lambda b:D\,\text{int}.+\,(a,b):S\,(D\,\text{int}\to S\,(D\,\text{int}\to D\,\text{int}))}\text{(T-Lam)}}\text{(T-Lam)}$$

$$\cdots\ \cfrac{\text{(T-Sub)}\ \cfrac{\cfrac{\text{(T-Var)}\ \cfrac{a:D\,\text{int}\in a:D\,\text{int},b:D\,\text{int}}{a:D\,\text{int},b:D\,\text{int}\vdash a:D\,\text{int}}\quad \cfrac{b:D\,\text{int}\in a:D\,\text{int},b:D\,\text{int}}{a:D\,\text{int},b:D\,\text{int}\vdash b:D\,\text{int}}\text{(T-Var)}}{a:D\,\text{int},b:D\,\text{int}\vdash (a,b):S\,(D\,\text{int}\times D\,\text{int})}\text{(T-Pair)}}{a:D\,\text{int},b:D\,\text{int}\vdash +\,(a,b):D\,\text{int}}\quad \cfrac{\text{(WF-Base)}\ \cfrac{}{D\,\text{int}:\star}\quad \cfrac{D<:D}{D\,(D\,\text{int}\times D\,\text{int}):\star}\text{(B-Refl)}}{a:D\,\text{int},b:D\,\text{int}\vdash (a,b):D\,(D\,\text{int}\times D\,\text{int})}\text{(WF-Pair)}\ \cdots\ \text{(T-App)}$$

## Regelanwendungsdiagramm 1 (Teil 3/3)

$$\cdots\ \cfrac{\text{(WF-Base)}\ \cfrac{}{D\,\text{int}:\star}\quad \cfrac{\text{(WF-Base)}\ \cfrac{}{D\,\text{int}:\star}\quad \cfrac{\cfrac{\text{(T-App)}\ \cfrac{\text{(T-Var)}\ \cfrac{f:S\,(D\,\text{int}\to S\,(D\,\text{int}\to D\,\text{int}))\in\Gamma}{\Gamma\vdash f:S\,(D\,\text{int}\to S\,(D\,\text{int}\to D\,\text{int}))}\quad \cfrac{a:D\,\text{int}\in\Gamma}{\Gamma\vdash a:D\,\text{int}}\text{(T-Var)}}{\Gamma\vdash f\,a:S\,(D\,\text{int}\to D\,\text{int})}\quad \cfrac{b:D\,\text{int}\in\Gamma}{\Gamma\vdash b:D\,\text{int}}\text{(T-Var)}}{\Gamma\vdash (f\,a)\,b:D\,\text{int}}\text{(T-App)}}{f:S\,(D\,\text{int}\to S\,(D\,\text{int}\to D\,\text{int})),a:D\,\text{int}\vdash \lambda b:D\,\text{int}.\,(f\,a)\,b:S\,(D\,\text{int}\to D\,\text{int})}\text{(T-Lam)}}{f:S\,(D\,\text{int}\to S\,(D\,\text{int}\to D\,\text{int}))\vdash \lambda a:D\,\text{int}.\lambda b:D\,\text{int}.\,(f\,a)\,b:S\,(D\,\text{int}\to S\,(D\,\text{int}\to D\,\text{int}))}\text{(T-Lam)}}{\lambda a:D\,\text{int}.\lambda b:D\,\text{int}.\,(f\,a)\,b:S\,(S\,(D\,\text{int}\to S\,(D\,\text{int}\to D\,\text{int}))\to S\,(D\,\text{int}\to S\,(D\,\text{int}\to D\,\text{int})))}\text{(T-Lam)}$$

$$\cdots\ \cfrac{\text{(B-Static)}\ \cfrac{S<:D}{\cfrac{\text{(B-Refl)}\ \cfrac{}{D<:D}\quad \cfrac{}{\text{int}<:\text{int}}\text{(Sub-Base)}}{\cfrac{D\,\text{int}<:D\,\text{int}}{D\,\text{int}\times D\,\text{int}<:D\,\text{int}\times D\,\text{int}}\text{(Sub-Pair)}}\text{(Sub-Type)}}}{S\,(D\,\text{int}\times D\,\text{int})<:D\,(D\,\text{int}\times D\,\text{int})}\text{(Sub-Type)}$$

Wie aus Diagramm 1 ersichtlich, lassen sich die Funktionen add und sub erfolgreich typisieren. Die Typisierung der Funktion sub ist in dem Diagramm nicht dargestellt, da sie der Typisierung der insofern äquivalenten Funktion add entspricht. Den Funktionen add und sub wird der Typ S(Dint→S(Dint→Dint)) zugeordnet, d. h. es wird festgelegt, dass die Funktionen add und sub jeweils statisch zu verwenden sind und es wird erkannt, dass die Funktionen add und sub jeweils einen dynamischen Wert vom Grundtyp int (Definitionstyp) auf eine statische Funktion (Zieltyp) abbilden, welche einen dynamischen Wert vom Grundtyp int auf einen dynamischen Wert vom Grundtyp int abbildet. Der Funktionstyp als Zieltyp ergibt sich dabei aufgrund der Betrachtung der Funktionen add und sub als zwei ineinander geschachtelte unäre Funktion anstatt einer zweistelligen Funktion.

Auch die Funktion apply wird erfolgreich typisiert, d.h. es wird erkannt, dass die Funktion apply, wie eingangs beschrieben, durch partielle Auswertung in eine Funktion erster Ordnung transformiert werden kann. Ausschlaggebend ist dabei, dass die Variable f in dem Rumpf der Funktion apply nicht als Teil eines Ausdrucks verwendet wird, der einen dynamischen Typen für f erfordert. Stattdessen fordert die Definition der Funktion apply die Übergabe einer statischen Funktionsvariablen, so dass sichergestellt ist, dass der Wert der Funktion f an der Stelle der Funktionsanwendung (f a) b ($\lambda$-Schreibweise) statisch bekannt ist. Zu berücksichtigen ist dabei, dass in dem Programmcode 1 nicht die Funktion apply, sondern die Funktion foo die Einstiegsfunktion darstellt. Andernfalls müsste die Funktion apply ggf. die zusätzliche Bedingung erfüllen, dass sie keine statischen Funktionsvariablen haben darf, so dass die Annotation der Variablen f als statische Funktion zu einem Typfehler und folglich einer Fehlermeldung für den Benutzer führen würde.

Beispiel 2:

Der nachfolgende Programmcode 5 stellt ein weiteres Programm dar, welches mit dem Verfahren überprüft wird.

Programmcode 5:

```
int apply(static ((int,int) => int) f, int a, int b) {
return f(a,b);
}
int add( int a, int b) { return a + b; }
int sub( int a, int b) { return a - b; }
int main( int a, int b) {
static ((int,int) => int) f;
if (true) {
f = add;
} else {
f = sub; {
f = sub;
}
return apply(f,a,b);
}
```

Die Definition der Funktion apply entspricht der Definition der Funktion apply in dem Programmcode 1 bzw. Programmcode 4, wobei in dem Programmcode 5 im Unterschied zu dem Programmcode 1 für die Variable f nicht nur der Funktionstyp als Grundtyp, sondern auch die für Funktionstypen vorgeschriebene statische Bindungszeit explizit annotiert ist. Die Funktion "main" ist durch ihren Namen als Einstiegsfunktion gekennzeichnet. Die Variablen a, b in den Funktionen apply, add, sub und main haben keine explizite Bindungszeitannotation. Den Variablen a und b muss aber eine dynamische Bindungszeit zugeordnet werden, damit das Programm zulässig sein kann, da die Einstiegsfunktion keine statischen Funktionsvariablen definieren darf.

Der nachfolgende Programmcode 6 gibt das Programm gemäß Programmcode 5 in der Notation des $\lambda$-Kalküls an, wobei die dynamischen Bindungszeiten der Variablen a, b vereinfachend weg gelassen sind.

Programmcode 6:

```
let apply = λf:S(int→S(int→int)). λa:int. λb:int. f (a,b) in
let add = λa:int. λb:int. a+b in
let sub = λa:int. λb:int. a-b in
λa:int. λb:int.
let f = if true then add else sub in
apply f a b
```

Die Notation "let x = $e_1$ in $e_2$" dient der einfacheren Darstellung und ist äquivalent zu der Notation $(\lambda x:T.e_2)e_1$ mit dem jeweils passenden Typen T von $e_1$, wobei der Typ T von $e_1$ nicht explizit annotiert ist, sondern durch die Typüberprüfung ermittelt wird, d.h. der Typ T ergibt sich implizit aus dem Programm und konkret aus der Typüberprüfung des Ausdrucks $e_1$, sofern das Programm zulässig ist.

Das Programm gemäß Programmcode 5 und 6 ist durch partielle Auswertung in ein Programm ohne Funktionen erster Klasse transformierbar. Der bedingte Ausdruck if true then add else sub in Programmcode 6 kann nämlich statisch zu add ausgewertet werden, so dass die Variable f an der Stelle ihres Aufrufs im Rahmen der Funktion apply statisch bekannt ist. Somit ist die Typüberprüfung erfolgreich und das Programm wird zugelassen. Die entsprechende, vorliegend nicht im Einzelnen dargestellte Typüberprüfung umfasst die Überprüfung der Regel T-COND für den bedingten Ausdruck if true then add else sub. Zum Zeitpunkt der Anwendung der Regel T-COND ist dabei den Ausdrücken add und sub bereits durch die Regel T-VAR ein Typ mit einer statischen Bindungszeit zugeordnet worden. Da auch der Bedingung des obigen bedingten Ausdrucks, d.h. der Konstante "true", gemäß der in Tabelle 4 angegebenen Vorschrift type (c) der Typ S bool und damit eine statische Bindungszeit zugeordnet wird, ist die Voraussetzung der Regel T-COND erfüllt, dass die Bedingung und die beiden Fälle des bedingten Ausdrucks dieselbe Bindungszeit aufweisen müssen, so dass die Regel erfolgreich angewendet wird und die Typisierung weiter fortfährt.

Auf die erfolgreiche Typüberprüfung folgt die partielle Auswertung des Programms. Dazu werden alle Funktionsdefinitionen in den Rumpf der Einstiegsfunktion main durch Inlining hineingefaltet und der Rumpf der Funktion main dadurch vereinfacht. Außerdem wird durch die partielle Auswertung der bedingte Ausdruck aufgelöst. Wenn die Variablen a, b der Einstiegsfunktion eine dynamische Bindungszeit aufweisen, wovon vorliegend ausgegangen wird, und der Zieltyp der Einstiegsfunktion dynamisch ist, enthält die durch die partielle Auswertung vereinfachte Einstiegsfunktion keine weiteren Ausdrücke. Die partielle Auswertung führt zu dem äquivalenten, partiell ausgewerteten Programm, welches nachfolgend als Programmcode 7 wiedergegeben ist.

Programmcode 7:

$$\lambda a{:}int.\ \lambda b{:}int.\ a{+}b$$

Dieses vereinfachte Programm kann anschließend in einen Maschinencode für eine beliebige Hardware umgewandelt bzw. übersetzt werden und von der jeweiligen Hardware mit geringer Laufzeit ausgeführt werden, unabhängig davon, ob die Hardware Funktionszeiger oder dynamische Speicherverwaltung unterstützt.

Beispiel 3:

Das nachfolgende Beispiel veranschaulicht einen Typfehler, der auftritt, wenn ein Programm mit einer Funktion erster Klasse nicht durch partielle Auswertung in ein äquivalentes Programm erster Ordnung transformierbar ist.

Programmcode 8:

```
int bar( bool p, int a) {
if (p) {
f = function(int x) { return x; 1};
} else {
f = function(int x) { return 0-x; };
}
return f(a);
}
```

In der λ-Syntax ergibt sich daraus der folgende Programmcode:

Programmcode 9:

$$bar = \lambda p{:}D\ \mathtt{bool}.\,\lambda a{:}D\ \mathtt{int}.$$

```
let f = if p
then λx: D int. x
else λx: D int. 0 - x
in f a
```

Die in Programmcode 8 nicht explizit annotierten Bindungszeiten für die Variable p vom Grundtyp bool und die Variablen a, x vom Grundtyp int werden durch das Verfahren als dynamisch angenommen, so wie es in Programmcode 9 explizit notiert ist.

Ähnlich zu den Funktionen add und sub in dem vorstehenden Regelanwendungsdiagramm 1 führt die Typüberprüfung der Ausdrücke λx: D int. x und λx: D int. 0-x nach mehreren Regelanwendungen zu der erfolgreichen Anwendung der Regel T-LAM mit dem nachstehenden Ergebnis:

$$\frac{\ldots}{p:D\ \mathtt{int}\ \mathtt{bool},a:D\ \mathtt{int}\vdash\lambda x{:}D\ \mathtt{int}.x:S\ (D\ \mathtt{int}\to D\ \mathtt{int})}\ (\text{T-Lam})$$

$$\frac{\ldots}{p : D\ \texttt{bool}, a : D\ \texttt{int} \vdash \lambda x{:}D\ \texttt{int}.0 - x : S\,(D\ \texttt{int} \to D\ \texttt{int})}\ (\text{T-Lam})$$

Die Typüberprüfung stellt also fest, dass die Funktionsdefinitionen λx: D int. x und λx: D int. 0 - x jeweils statische Funktionen beschreiben, die einen dynamischen Integer-Wert auf einen dynamischen Integer-Wert abbilden.

Der diesen Funktionsdefinitionen nächstübergeordnete Ausdruck ist der bedingte if-else-Ausdruck, der mit der Regel T-COND zu überprüfen ist. Da dem Ausdruck p, welcher die Bedingung des bedingten Ausdrucks darstellt, eine dynamische Bindungszeit zugeordnet wurde und die Regel T-COND verlangt, dass die Bedingung und die Fälle des bedingten Ausdrucks dieselbe Bindungszeit aufweisen, müsste die erfolgreiche Anwendung der Regel T-COND die folgende Form annehmen:

$$\frac{\Gamma \vdash p : D\ \texttt{bool} \qquad \Gamma \vdash e_t : D\ C \qquad \Gamma \vdash e_e : D\ C}{\Gamma \vdash \texttt{if}\ p\ \texttt{then}\ e_t\ \texttt{else}\ e_e : D\ C}\ (\text{T-Cond})$$

wobei:

$$\Gamma = p : D\ \texttt{bool}, a : D\ \texttt{int}$$

$$e_t = \lambda x{:}D\ \texttt{int}.x$$

$$e_e = \lambda x{:}D\ \texttt{int}.0 - x$$

Allerdings ist aufgrund der Anwendung der Regel T-LAM bekannt, dass $\Gamma \vdash e_t : S(D\text{int} \to D\text{int})$, d.h. dass der Ausdruck $e_t$ eine statische Bindungszeit aufweist. Dasselbe gilt für $e_e$.

Um zu überprüfen, ob die Regel T-COND dennoch erfolgreich angewendet werden kann, wird überprüft, ob einem oder mehreren der Ausdrücke p, et oder $e_e$ durch Subtyping ein Supertyp zugeordnet werden kann, der die Anwendung der Regel ermöglicht. Da der Typ D bool außer sich selbst keinen Supertypen aufweist, kommt es darauf an, ob einem der Ausdrücke et oder $e_e$ ein geeigneter Supertyp zugeordnet werden kann. Dazu wird ein hypothetischer Supertyp D C mit einer dynamischen Bindungszeit angenommen, der in die Regel T-SUB eingesetzt wird, so dass sich für diese folgende Form ergibt:

$$\frac{\Gamma \vdash e_t : S\,(D\ \texttt{int} \to D\ \texttt{int}) \qquad D\ C : \star \qquad S\,(D\ \texttt{int} \to D\ \texttt{int}) <: D\ C}{\Gamma \vdash e_t : D\ C}\ (\text{T-Sub})$$

Aus den Subtypenregeln und insbesondere der Regel SUB-FUN ergibt sich aber, dass zu dem Typen S(Dint→Dint) kein wohlgeformter Supertyp mit einer dynamischen Bindungszeit existiert, d.h. die Bedingung DC: * nicht erfüllbar ist. Somit sind die Regeln T-SUB und T-COND nicht erfolgreich anwendbar und der bedingte if-else-Ausdruck kann nicht erfolgreich typisiert werden. Es wird dadurch erkannt, dass das Programm nicht in ein äquivalentes Programm erster Ordnung umgewandelt werden kann, weil die in der Funktionsanwendung f a anzuwendende Funktion in dynamischer Weise von der dynamischen Bool'schen Variablen p abhängt. Auf diese Erkennung hin wird ein entsprechender Hinweis an den Benutzer ausgegeben. In dem Hinweis wird dem Benutzer der Ausdruck des Programms mitgeteilt, an dem der Typfehler aufgetreten ist, d.h. vorliegend der bedingte if-else-Ausdruck, so dass das Problem einfach und gezielt behoben und das Programm in ein transformierbares und somit zulässiges Programm umgewandelt werden kann.

Die nachfolgend beschriebene einzige Figur zeigt ein Flussdiagramm, welches ein Verfahren zur Überprüfung und Transformation eines Computerprogramms gemäß einer Ausführungsform der Erfindung veranschaulicht. Die runden Felder kennzeichnen jeweils Eingangs- bzw. Ausgangsgrößen des Verfahrens und die eckigen Felder kennzeichnen unter Verwendung der jeweiligen Eingangsgrößen bzw. unter Erzeugung der jeweiligen Ausgangsgrößen durchgeführte Verfahrensschritte.

Ein Programm 10 liegt in einer höheren Programmiersprache vor, die Funktionen erster Klasse unterstützt. In einem Verfahrensschritt 12 wird eine Typüberprüfung des Programms 10 durchgeführt, um jedem Ausdruck des Programms einen Typen zuzuordnen, der einen Grundtypen und eine Bindungszeit des Ausdrucks umfasst, wobei bei der Typüberprüfung ein Funktionstyp nur mit einer statischen Bindungszeit akzeptiert wird.

Ist die Typüberprüfung erfolgreich, d.h. dass das Programm mit Funktionstypen mit statischer Bindungszeit vollständig typisiert werden kann, folgt in einem weiteren Verfahrensschritt 14 die partielle Auswertung des Programms. Ist die Typüberprüfung nicht erfolgreich, wird eine Fehlermeldung 16 erzeugt und beispielsweise über eine Anzeigeeinrichtung des das Verfahren durchführenden Computersystems an einen Benutzer ausgegeben, wobei die Fehlermeldung die Ursache des Fehlers angibt.

Die partielle Auswertung 14 transformiert das Programm in ein äquivalentes Programm erster Ordnung, d.h. ohne Funktionen erster Klasse. Anschließend wird das nach wie vor auf der Hochsprachenebene vorliegende partiell ausgewertete Programm in einem Verfahrensschritt 18 durch Kompilieren und Assemblieren in ein Zielprogramm 20 für eine Hardware übersetzt, auf der das Zielprogramm 20 dann vorzugsweise direkt ausgeführt wird.

**Bezugszeichenliste**

10 Computerprogramm

12 Typüberprüfung

14 partielle Auswertung

16 Fehlermeldung

18 Kompilieren und Assemblieren

20 Zielprogramm

**Patentansprüche**

1. Verfahren zur Überprüfung und/oder Transformation eines Computerprogramms (10), das in einer Programmiersprache vorliegt, welche Funktionen erster Klasse unterstützt, bei dem eine Typüberprüfung (12) des Programms (10) oder zumindest eines Teils des Programms (10) durchgeführt wird, um jedem Ausdruck des Programms (10) oder Teils des Programms (10) einen Typen zuzuordnen, der aus einem Grundtypen und einer Bindungszeit besteht, wobei die Menge der Grundtypen mindestens Basistypen zur Beschreibung einfacher Werte und einen Funktionstypen zur Beschreibung von Funktionen umfasst und die Menge der Bindungszeiten mindestens eine statische Bindungszeit und eine dynamische Bindungszeit umfasst und wobei bei der Typüberprüfung (12) ein Funktionstyp nur gemeinsam mit der statischen Bindungszeit akzeptiert wird.

2. Verfahren nach Anspruch 1,
   **dadurch gekennzeichnet, dass**
   eine Fehlermeldung ausgegeben wird, wenn bei der Typüberprüfung (12) festgestellt wird, dass einem Ausdruck kein Typ zugeordnet werden kann.

3. Verfahren nach Anspruch 1 oder 2,
   dadurch**gekennzeichnet**, dass
   eine Fehlermeldung ausgegeben wird, wenn ein Ausdruck mit einem Funktionstypen als mögliches Ergebnis einer dynamischen Fallunterscheidung angegeben ist.

4. Verfahren nach zumindest einem der vorhergehenden Ansprüche,
   dadurch**gekennzeichnet**, dass
   eine Fehlermeldung ausgegeben wird, wenn bei der Typüberprüfung (12) festgestellt wird, dass in dem Programm (10) oder in dem Teil des Programms (10) ein Funktionstyp annotiert ist, der keine statische Bindungszeit aufweist.

5. Verfahren nach zumindest einem der vorhergehenden Ansprüche,
   dadurch**gekennzeichnet**, dass
   auf den Bindungszeiten eine lineare Ordnung definiert ist, gemäß der die statische Bindungszeit kleiner ist als die dynamische Bindungszeit.

**6.** Verfahren nach zumindest einem der vorhergehenden Ansprüche,
dadurch**gekennzeichnet,** dass
bei der Typüberprüfung (12) ein Typ mit einem Funktionstyp als Grundtyp nur dann als wohlgeformt angenommen wird, wenn der Funktionstyp einen wohlgeformten Zieltyp der Funktion und für die ein oder mehreren Variablen der Funktion jeweils einen wohlgeformten Definitionstyp angibt und wenn der Typ eine statische Bindungszeit aufweist.

**7.** Verfahren nach zumindest einem der vorhergehenden Ansprüche,
dadurch**gekennzeichnet**, dass
die Menge der Grundtypen eine Menge von zusammengesetzten Grundtypen zur Beschreibung von zusammengesetzten Werten umfasst, die zumindest einen Paartypen zur Beschreibung von Paaren von Werten umfasst, wobei bei der Typüberprüfung (12) ein Typ mit einem Paartyp als Grundtyp vorzugsweise nur dann als wohlgeformt angenommen wird, wenn die Typen, welche die Elemente des Paares beschreiben, jeweils wohlgeformt sind und Bindungszeiten aufweisen, die nicht kleiner sind als die Bindungszeit des Typen mit dem Paartyp als Grundtyp.

**8.** Verfahren nach zumindest einem der vorhergehenden Ansprüche,
dadurch**gekennzeichnet,** dass
bei der Typüberprüfung (12) einem Ausdruck, der eine Funktion mit zumindest einer Funktionsvariablen definiert und eine Angabe des Typen jeder Funktionsvariablen sowie eine Angabe des Rumpfs der Funktion umfasst, genau dann, wenn der angegebene Typ jeder Funktionsvariable wohlgeformt ist und dem Rumpf der Funktion in dem Kontext, der den Kontext des Ausdrucks und die ein oder mehreren Funktionsvariablen mit jeweils den angegebenen Typen jeder Funktionsvariablen umfasst, ein Typ zugeordnet wird, ein Funktionstyp mit statischer Bindungszeit zugeordnet wird, welcher die für die eine oder mehreren Funktionsvariablen angegebenen Typen als Definitionstypen der Funktion und den dem Rumpf zugeordneten Typen als Zieltypen der Funktion angibt.

**9.** Verfahren nach zumindest einem der vorhergehenden Ansprüche,
dadurch**gekennzeichnet,** dass
bei der Typüberprüfung (12) einem Ausdruck, der ein Paar definiert, wobei ein erstes Element des Paares durch einen ersten Unterausdruck und ein zweites Element des Paares durch einen zweiten Unterausdruck angegeben ist, genau dann, wenn dem ersten Unterausdruck ein erster Typ und dem zweiten Unterausdruck ein zweiter Typ zugeordnet wird, ein Paartyp mit statischer Bindungszeit zugeordnet wird, der das erste Element des Paares durch den ersten Typen und das zweite Element des Paares durch den zweiten Typen beschreibt.

**10.** Verfahren nach zumindest einem der vorhergehenden Ansprüche,
dadurch**gekennzeichnet,** dass
sowohl auf der Menge der Typen als auch auf der Menge der Grundtypen jeweils eine reflexive und transitive Subtypbeziehung definiert ist, insbesondere wobei ein erster Typ genau dann als Subtyp eines zweiten Typen angenommen wird, wenn die Bindungszeit des ersten Typen kleiner oder gleich der Bindungszeit des zweiten Typen ist und wenn der Grundtyp des ersten Typen ein Subtyp des Grundtypen des zweiten Typen ist.

**11.** Verfahren nach Anspruch 10,
dadurch**gekennzeichnet**, dass
ein erster Funktionstyp genau dann als Subtyp eines zweiten Funktionstypen angenommen wird, wenn jeder Definitionstyp des zweiten Funktionstypen ein Subtyp des jeweiligen korrespondierenden Definitionstypen des ersten Funktionstypen ist und der Zieltyp des ersten Funktionstypen ein Subtyp des Zieltypen des zweiten Funktionstypen ist.

**12.** Verfahren nach Anspruch 10 oder 11,
dadurch**gekennzeichnet,** dass
ein erster Paartyp genau dann als Subtyp eines zweiten Paartypen angenommen wird, wenn der Typ des ersten Elements des ersten Paartypen ein Subtyp des Typen des ersten Elements des zweiten Paartypen ist und der Typ des zweiten Elements des ersten Paartypen ein Subtyp des Typen des zweiten Elements des zweiten Paartypen ist.

**13.** Verfahren nach zumindest einem der vorhergehenden Ansprüche,
dadurch**gekennzeichnet**, dass
bei der Typüberprüfung (12) einem bedingten Ausdruck, dessen Bedingung durch einen ersten Unterausdruck angegeben ist und dessen wenigstens zwei Fälle durch einen zweiten und einen dritten Unterausdruck angegeben sind, genau dann, wenn dem ersten Unterausdruck ein erster Typ mit einem Bool'schen Grundtyp und einer beliebigen ersten Bindungszeit zugeordnet wird und wenn dem zweiten und dritten Unterausdruck jeweils ein identischer zweiter Typ mit einem beliebigen Grundtypen und der ersten Bindungszeit zugeordnet wird, der zweite Typ zugeordnet wird.

**14.** Verfahren zur Transformation eines Computerprogramms (10), das in einer Programmiersprache vorliegt, welche Funktionen erster Klasse unterstützt, bei dem eine Typüberprüfung (12) des Programms (10) oder zumindest eines Teils des Programms (10) durchgeführt wird, um jedem Ausdruck des Programms (10) oder Teils des Programms (10) einen Typen zuzuordnen, der aus einem Grundtypen und einer Bindungszeit besteht, wobei die Menge der Grundtypen mindestens Basistypen zur Beschreibung einfacher Werte und einen Funktionstypen zur Beschreibung von Funktionen umfasst und die Menge der Bindungszeiten mindestens eine statische Bindungszeit und eine dynamische Bindungszeit umfasst,
wobei bei der Typüberprüfung (12) ein Funktionstyp nur gemeinsam mit der statischen Bindungszeit akzeptiert wird, und
wobei, wenn das Programm (10) oder der Teil des Programms (10) von der Typüberprüfung (12) akzeptiert wird, durch partielle Auswertung des Programms (10) oder des Teils des Programms (10) alle in dem Programm (10) oder dem Teil des Programms (10) enthaltenen Funktionen erster Klasse eliminiert werden.

**15.** Verfahren nach Anspruch 14,
dadurchgekennzeichnet, dass
das partiell ausgewertete Programm in einen Maschinencode (20) für eine Hardwareplattform übersetzt wird, die keine Unterstützung für Funktionszeiger bietet und/oder keine Unterstützung für eine dynamische Speicherverwaltung bietet.

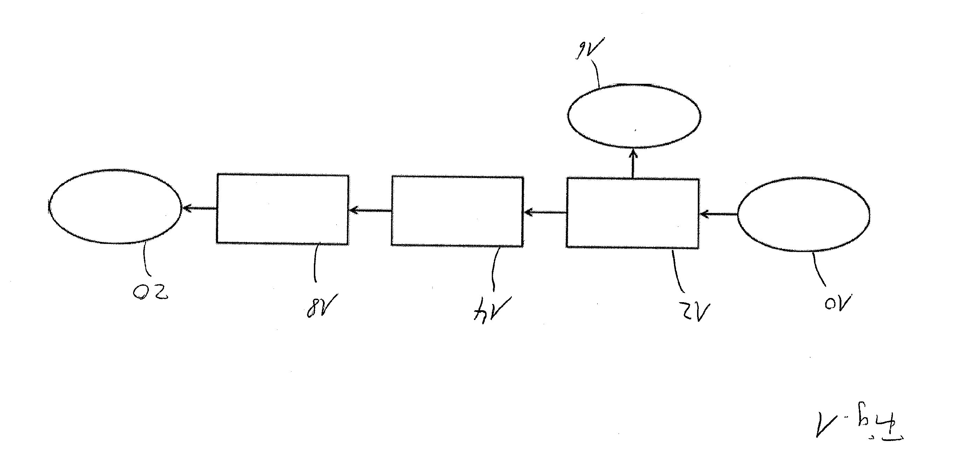

Fig. 1

# EP 2 787 437 A1

**Europäisches Patentamt**
**European Patent Office**
**Office européen des brevets**

**EUROPÄISCHER RECHERCHENBERICHT**

Nummer der Anmeldung

EP 13 16 2073

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MONNIER S ET AL: "Inlining as staged computation", JOURNAL OF FUNCTIONAL PROGRAMMING, Bd. 13, Nr. 3, Mai 2003 (2003-05), Seiten 647-676, XP009172119, ISSN: 0956-7968, DOI: 10.1017/S0956796802004616 [gefunden am 2003-05-13] | 1-13 | INV. G06F9/45 |
| Y | * Zusammenfassung * * Seite 647, letzter Absatz - Seite 648, Absatz 2; Abbildungen 1-9 * * Seite 649, letzter Absatz - Seite 660, Absatz 2 * * Seite 664, Absatz 2 - Seite 664, letzter Absatz * ----- | 14,15 | |
| Y | NEIL MITCHELL ET AL: "Losing functions without gaining data", PROCEEDINGS OF THE 2ND ACM SIGPLAN SYMPOSIUM ON HASKELL, HASKELL '09, Januar 2009 (2009-01), Seiten 13-24, XP055076895, New York, New York, USA DOI: 10.1145/1596638.1596641 ISBN: 978-1-60-558508-6 * Zusammenfassung * * Seite 13, linke Spalte, Absatz 1 - Seite 17, rechte Spalte, Absatz 8 * * Seite 20, linke Spalte, Absatz 7 - Seite 20, linke Spalte, Absatz 8 * * Seite 24, linke Spalte, Absatz 3 - Seite 24, linke Spalte, Absatz 6 * ----- -/-- | 14,15 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| München | 29. August 2013 | Lelait, Sylvain |

Europäisches
Patentamt

European
Patent Office

Office européen
des brevets

## EUROPÄISCHER RECHERCHENBERICHT

Nummer der Anmeldung

EP 13 16 2073

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | GUSTAVO ARROYO ET AL: "A Transformational Approach to Polyvariant BTA of Higher-Order Functional Programs", 17. Juli 2008 (2008-07-17), LOGIC-BASED PROGRAM SYNTHESIS AND TRANSFORMATION, SPRINGER BERLIN HEIDELBERG, BERLIN, HEIDELBERG, PAGE(S) 40 - 54, XP019115207, ISBN: 978-3-642-00514-5 * Zusammenfassung * * Seite 40, Absatz 1 - Seite 41, Absatz 3 * * Seite 42, Absatz 5 - Seite 45, letzter Absatz * ----- | 1-15 | |
| A | DIRK DUSSART ET AL: "Polymorphic recursion and subtype qualifications: Polymorphic binding-time analysis in polynomial time", 25. September 1995 (1995-09-25), STATIC ANALYSIS, SPRINGER BERLIN HEIDELBERG, BERLIN, HEIDELBERG, PAGE(S) 118 - 135, XP019179076, ISBN: 978-3-540-60360-3 * Seite 118, letzter Absatz - Seite 119, Absatz 3 * * Seite 120, Absatz 3 - Seite 126, Absatz 5 * ----- -/-- | 1-15 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 29. August 2013 | Lelait, Sylvain |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**Europäisches Patentamt**
**European Patent Office**
**Office européen des brevets**

# EUROPÄISCHER RECHERCHENBERICHT

Nummer der Anmeldung

EP 13 16 2073

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Peter Thiemann: "A unified framework for binding-time analysis" In: "TAPSOFT '97: Theory and Practice of Software Development", Januar 1997 (1997-01), Springer-Verlag, Berlin/Heidelberg, XP055076900, ISBN: 978-3-54-062781-4 Bd. 1214, Seiten 742-756, DOI: 10.1007/BFb0030638, * Zusammenfassung * * Seite 742, Absatz 1 - Seite 749, Absatz 4 * * Seite 751, Absatz 1 - Seite 752, letzter Absatz * ----- | 1-15 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 29. August 2013 | Lelait, Sylvain |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................................
& : Mitglied der gleichen Patentfamilie, übereinstimmendes Dokument

EPO FORM 1503 03.82 (P04C03)